(19) Europäisches Patentamt
European Patent Office
Office européen des brevets

(11) **EP 2 085 459 A1**

(12) **EUROPEAN PATENT APPLICATION**
published in accordance with Art. 153(4) EPC

(43) Date of publication:
05.08.2009 Bulletin 2009/32

(21) Application number: 07737185.4

(22) Date of filing: 17.05.2007

(51) Int Cl.:
*C10G 47/12* (2006.01)   *B01J 29/16* (2006.01)
*B01J 29/48* (2006.01)   *B01J 29/78* (2006.01)
*B01J 35/10* (2006.01)   *C10G 47/16* (2006.01)

(86) International application number:
PCT/JP2007/000529

(87) International publication number:
WO 2007/135769 (29.11.2007 Gazette 2007/48)

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(30) Priority: 23.05.2006 JP 2006142419
30.08.2006 JP 2006233334
23.03.2007 JP 2007075778

(71) Applicant: **Japan Energy Corporation**
**Tokyo 105-0001 (JP)**

(72) Inventor: **MATSUSHITA, Koichi**
**Toda-shi, Saitama 3350026 (JP)**

(74) Representative: **Forstmeyer, Dietmar**
**BOETERS & LIECK**
**Oberanger 32**
**80331 München (DE)**

(54) **PROCESS FOR PRODUCING HYDROCARBON FRACTION**

(57)      It is intended to provide a method for producing an LPG fraction, a gasoline fraction, a kerosene fraction, a gas oil fraction, monocyclic aromatic hydrocarbon and a non-aromatic naphtha fraction from hydrocracked oil obtained by hydrocracking hydrocarbon oil containing polycyclic aromatic hydrocarbon to convert into a light hydrocarbon fraction, and at the same time efficiently and selectively to produce monocyclic aromatic hydrocarbon which is higher valuable alkylbenzenes.

The method for producing hydrocarbon fraction of the present invention comprises a hydrocracking step of subjecting a hydrocarbon feedstock which contains poly-cyclic aromatic hydrocarbon and in which the ratio of carbons constituting an aromatic ring to the total carbons in the hydrocarbon oil (the aromatic ring-constituting carbon ratio) is 35 mole % or more to catalytic cracking in the presence of hydrogen, and is **characterized in that** 40% or more of a fraction with a boiling point of 215°C or higher in the hydrocarbon feedstock is converted into a fraction with a boiling point lower than 215°C and an hydrocracked oil containing 30 vol % or more of monocyclic aromatic hydrocarbon is produced.

EP 2 085 459 A1

**Description**

TECHNICAL FIELD

The present invention relates to a method for producing various hydrocarbon fractions by hydrocracking specific hydrocarbon oils containing polycyclic aromatic hydrocarbons. More particularly, the present invention relates to a method for producing hydrocarbon fractions by obtaining a hydrocracked oil which selectively contains a large amount of monocyclic aromatic hydrocarbons and then efficiently producing light hydrocarbon fractions such as an LPG fraction, a gasoline fraction, a kerosene fraction, a gas oil fraction, a non-aromatic naphtha fraction, and a monocyclic aromatic hydrocarbon.

BACKGROUND ART

In recent years, the demand of petroleum products tends to lighten, particularly, petrochemical feeds represented by BTX (benzene, toluene, and xylene), is increasing more and more. Furthermore, in addition to BTX, aromatic hydrocarbons are widely used as a gasoline blending stock due to the generally high octane value. A fluid catalytic cracking process can be given as a method for producing fractions containing monocyclic aromatic hydrocarbons represented by BTX. Although the method can produce about 50 vol% of a naphtha fraction, the content of monocyclic aromatic hydrocarbons in the naphtha fraction is about 20% at most, and the content of BTX is less than 10%. A catalytic reforming process can also be given as a method for selectively producing aromatic hydrocarbons. However, the feed for the catalytic reforming process is limited to naphtha fractions having the same boiling point range, whereby restrained quantitatively. For this reason, in order to deal with diversification of feeds and to get more inexpensive feeds, a method for producing monocyclic aromatic hydrocarbons from fractions heavier than BTX has been desired.

In addition to the fluid catalytic cracking process, a vacuum gas oil hydrocracking process has been widely adopted as a method for producing light hydrocarbon oils by cracking of heavy oils. In the vacuum gas oil hydrocracking method, the target fractions are obtained by causing a feed to come in contact with a catalyst at a high temperature in the presence of high pressure hydrogen gas. These methods have been generally used for producing only fractions such as gas oils and jet fuels with a boiling point of about 150 to 370°C in the past. Therefore, a method of obtaining a product having desired properties for use as gas oils and jet fuels, that is, a method of possibly minimizing the aromatic content has been adopted.

On the other hand, in regard to various oil stocks obtained from petroleum refining processes, the consumption of fractions with high sulfur content or a high aromatic content tends to decrease as a fuel oil from the view of domestic and international environmental measure. For example, since the gas oil fraction, which is also called light cycle oil (LCO), obtained from a fluid catalytic cracking process or the gas oil fraction obtained from a thermal cracking process has a high sulfur content or a high polycyclic aromatic content, these fractions discharge sulfur oxide and particulate matter when used for a diesel fuel. Therefore, it is difficult to blend a large amount of these fractions.

Patent Document 1 describes the use of LCO and the like as feed for a hydrocarbon conversion reaction. However, the proposed method is still just a technique for producing gas oil and kerosene. Patent Document 1 does not describe production of aromatic compounds represented by BTX. Patent Document 2 discloses a method of treating aromatic hydrocarbons with hydrogen to reduce particulate matter generated during combustion. However, the object of the technology is to produce chain hydrocarbons by reducing aromatics. Patent Document 3 discloses a method for hydrogenating a polycyclic aromatic compound using a solid catalyst. The method aims to produce gas oil having an improved cetane number. This is not such a technology that reduces the molecular weight of the polycyclic aromatic compounds and converts the compounds even into a feed for petrochemical. The Patent Documents 4 and 5 propose methods for producing gasoline fractions by hydrocracking of LCO fractions. These methods aim to control the conversion rate to gasoline fractions by a comparatively mild reaction in order to have a certain amount of gas oil fractions remain. Patent Document 6 discloses a method for producing kerosene fractions, gas oil fractions, and naphtha fractions by hydrocracking a mixture of LCO fractions and VGO (vacuum gas oil) fractions. The main purpose of the method is production of kerosene and gas oil fractions. Preferential production of BTX is not intended.

Patent Document 7 discloses a method for lightening heavy aromatic hydrocarbons having nine or more carbon numbers, but contains no description on the number of aromatic rings. The difficulty of converting aromatic hydrocarbons having two or more rings to monocyclic aromatic hydrocarbons is not recognized. Non-patent Document 1 proposes a method for partially producing BTX using LCO as feed. However, the object of the method is production of diesel oil and gasoline. This is not a method for preferentially producing BTX. Non-patent Document 2 also discloses a method for producing high octane gasoline by hydrocracking 1-methylnaphthalene, which is a bicyclic aromatic hydrocarbon contained in LCO fractions in large quantity. However, since the reaction produces a large amount of cycloparaffins and isoparaffins, the octane number of the product is still low as about 85. This is thus not a method for selectively producing monocyclic aromatic hydrocarbons.

As described above, although many methods for producing naphthenes by hydrogenating the aromatic nuclei of polycyclic aromatic hydrocarbons or methods for partially hydrogenating the aromatic nuclei of polycyclic aromatic hydrocarbons are disclosed, there has never been established method for selectively producing alkylbenzenes represented by BTX using heavy hydrocarbon as a feed.

[Patent Document 1] JP-A- 2004-148314
[Patent Document 2] JP-A- H08-183962
[Patent Document 3] JP-A- 2000-226589
[Patent Document 4] Japanese Patent No. 3001963
[Patent Document 5] JP-B- H03-170598
[Patent Document 6] WO 2006/062712
[Patent Document 7] Japanese Patent No. 3302553
[Non-patent Document 1] Thakkar et al., National Petrochemical & Refiners Association, Annual Meeting, AM-05-53 (2005)
[Non-patent Document 2] Demirel et al., Fuel, Vol. 77, No. 4, p301-311 (1998)

DISCLOSURE OF THE INVENTION

PROBLEMS TO BE SOLVED BY THE INVENTION

Under the above circumstances, an object of the present invention is to provide a method for producing at least two hydrocarbon fractions selected from an LPG fraction, a gasoline fraction, a kerosene fraction, a gas oil fraction, a monocyclic aromatic hydrocarbon fraction, and a non-aromatic naphtha fraction from the hydrocracked oil, by hydrocracking a hydrocarbon fraction containing polycyclic aromatic hydrocarbons to convert into light hydrocarbon fractions without causing a problem such as coking, at the same time efficiently and selectively forming monocyclic aromatic hydrocarbons which are high value-added alkylbenzenes.

MEANS FOR SOLVING THE PROBLEMS

As a result of extensive studies, the inventor of the present invention has found that monocyclic aromatic hydrocarbons represented by alkylbenzenes and various light hydrocarbon fractions can be efficiently produced by selecting the type of carbon structures constituting the hydrocarbon feeds used for hydrocracking and the operating conditions and highly controlling the balance of the hydrogenation activity and cracking activity in the hydrocracking. This finding has led to the concept of the method for producing hydrocarbon fractions of the present invention.

Specifically, the present invention is a method as described below.
(1) A method for producing hydrocarbon fractions comprising a step of catalytically hydrocracking a hydrocarbon feedstock containing polycyclic aromatic hydrocarbons and having not less than 35 mol% of an aromatic ring-constituting carbon ratio, which is the ratio of carbon atoms constituting aromatic rings to the total number of carbon atoms of the hydrocarbon feedstock, in the presence of hydrogen to convert not less than 40% of the fractions having a boiling point of not less than 215°C to fractions having a boiling point of less than 215°C and produce a hydrocracked oil containing 30 vol% or more of monocyclic aromatic hydrocarbons.

(2) The method according to (1), wherein the operating conditions in the hydrocracking step are 2 to 10 MPa of a pressure, 200 to 450°C of a temperature, 0.1 to 10.0 h$^{-1}$ of a LHSV, 100 to 5000 NL/L of a hydrogen/oil ratio, and not less than 0.5 of an aromatic ring carbon remaining ratio, which is the ratio of the aromatic ring-constituting carbon ratio of the hydrocracked oil to the aromatic ring-constituting carbon ratio of the hydrocarbon feedstock.

(3) The method according to (1) or (2), wherein the hydrocarbon feedstock is a hydrocarbon oil fraction obtained from a catalytic cracker, a thermal cracker, an ethylene cracker, a supercritical fluid cracker, or a catalytic reformer or a mixture of two or more of these hydrocarbon oil fractions.
(4) The method according to any one of (1) to (3), wherein the hydrocarbon feedstock has distillation properties of a 10 vol% distillate temperature of 140 to 230°C and a 90 vol% distillate temperature of 230 to 600°C.

(5) The method according to any one of (1) to (4), further comprising a separation step of obtaining at least two hydrocarbon fractions selected from an LPG fraction, a gasoline fraction, a kerosene fraction, a gas oil fraction, a non-aromatic naphtha fraction, and a monocyclic aromatic hydrocarbons from a hydrocracked oil obtained by hydrocracking.

(6) The method according to any one of (1) to (5), wherein the hydrocracking catalyst comprises a carrier which comprises a composite oxide and a binder combining the composite oxide and at least one metal selected from the Group VI metals and Group VIII metals of the periodic table supported on the carrier, and has properties of a specific surface area of 100 to 800 m$^2$/g, a median pore diameter of 3 to 15 nm, and a pore volume occupied by pores with a pore diameter of 2 to 60 nm of 0.1 to 1.0 mL/g.

(7) The method according to (6), wherein the composite oxide contains at least one of silica-alumina, silica-titania, silica-zirconia, silica-magnesia, silica-alumina-titania, silica-alumina-zirconia, tungstated zirconia, sulfated zirconia, and zeolite.

(8) The method according to (6), wherein the binder comprises at least one of alumina, silica-alumina, and boria-alumina.

EFFECT OF THE INVENTION

According to the method for producing hydrocarbon fractions of the present invention, high-boiling-point hydrocarbon fractions are converted into low-boiling-point hydrocarbon fractions, and also high value-added alkylbenzenes (monocyclic aromatic hydrocarbons) represented by BTX are efficiently produced by using a hydrocarbon oil containing a large amount of polycyclic aromatic hydrocarbons as a feed and contacting the hydrocarbon oil with an optimal hydrocracking catalyst in the presence of hydrogen, while avoiding catalyst poisoning. In addition, since a hydrocracking catalyst which is most suitable for the hydrocracking and has a specified composition and specified properties suitably balanced in hydrocracking activity and hydrogenation activity is used, gas generation by excessive cracking can be controlled and a decrease in the activity by coking due to insufficiency of hydrogenation activity can be suppressed. In addition to the capability of producing alkylbenzenes at a high efficiency and a high selectivity, an LPG fraction, a gasoline fraction, a kerosene fraction, a gas oil fraction, a non-aromatic naphtha fraction, and a monocyclic aromatic hydrocarbons can be obtained by separating the resulting hydrocracked oil using an appropriate known method. These fractions can be effectively used as a low-sulfur-content LPG blending stock, a high-octane-number low-sulfur-content gasoline blending stock, a low-sulfur-content kerosene blending stock, a high-cetane-number low-sulfur-content gas oil blending stock, a low-sulfur-content non-aromatic naphtha stock and a petrochemical feed and contribute to a reduction of environmental load.

BEST MODE FOR CARRYING OUT THE INVENTION

The term "polycyclic aromatic hydrocarbons" used in the present invention refers to hydrocarbons having two or more aromatic rings, and the term "monocyclic aromatic hydrocarbon" refers to compounds which hydrogen atoms of benzene are unsubstituted with 0 to 6 chain hydrocarbon groups, and are also called "alkylbezenes". The term "1.5-cyclic aromatic hydrocarbons" refers to compounds having one aromatic ring and one saturated naphthenic ring in a molecule such as tetralin (1,2,3,4-tetrahydronaphthalene) and indan (2,3-dihydroindene).

The method for producing hydrocarbon fractions of the present invention will now be described in detail in the order of feeds for hydrocracking reaction, pre-treatment step, hydrocracking reaction, hydrocracking catalyst, production method of hydrocracking catalyst, refining method of hydrocracked oil, and product hydrocarbons.

[Feeds for hydrocracking reaction]

The hydrocarbon oil used as the feed for the hydrocracking reaction in the present invention contains polycyclic aromatic hydrocarbons. In the hydrocarbon oil, the ratio of carbon atoms constituting aromatic rings to the total number of carbon atoms of the hydrocarbon oil (the aromatic ring-constituting carbon ratio) is not less than 35 mol%, preferably not less than 40 mol%, and particularly preferably not less than 45 mol%. If the ratio of carbon atoms constituting aromatic rings to the total number of carbon atoms is less than 35 mol%, the aimed monocyclic aromatic hydrocarbons (alkylbenzenes) cannot unpreferably be obtained at a high yield. The aromatic ring-constituting carbon ratio can be calculated by analyzing $^{13}$C-NMR using a nuclear magnetic resonance apparatus (NMR).

More is not necessarily better for the number of aromatic rings. From the viewpoint of eventually producing monocyclic aromatic compounds preferentially, preferable polycyclic hydrocarbons in the feed are bicyclic aromatic hydrocarbons. In particular, a feed containing a small amount of tri-ring or larger polycyclic aromatics hydrocarbons and a large amount of 1.5 ring and 2-ring aromatic hydrocarbons is preferable. The amount of the tri- or larger polycyclic aromatic hydrocarbons is preferably 5.0 vol% or less, more preferably 3.0 vol% or less, and particularly preferably 1.0 vol% or less; and the amount of the bi- or larger polycyclic aromatic hydrocarbons is preferably 10 vol% or more, more preferably 20 vol% or more, and particularly preferably 30 vol% or more. A feed containing 50 vol% or more, more preferably 60 vol% or more, and particularly preferably 70 vol% or more of aromatic hydrocarbons with less than tricyclic aromatic hydrocarbons (the total of mono-cyclic, 1.5-ring and 2-ring aromatic hydrocarbons) is preferably used.

Preferable distillation properties may be determined based on the above aromatic composition. Specifically, taking the boiling point (218°C) of naphthalene of bicyclic aromatic hydrocarbon into account, at least the content of 215 to 280°C fractions is 10 vol% or more, and the content of 215°C or higher fractions is 30 vol% or more, and more preferably 40 vol% or more. Therefore, as preferable distillation properties of feeds, 10% distillation temperature is 100 to 230°C, more preferably 140 to 230°C, and still more preferably 150 to 220°C, and 90% distillation temperature is 230 to 600°C, more preferably 230 to 400°C, and still more preferably 230 to 310°C, and particularly preferably 265 to 300°C.

As inhibitory substances to the hydrocracking reaction, usually 0.1 to 3,000 wt ppm of nitrogen and 0.1 to 3 wt% of sulfur are contained in feeds for the hydrocracking reaction. Main sulfur compounds include benzothiophenes, dibenzothiophenes, and sulfides. In the boiling range of the feed used in the present invention, benzothiophenes and dibenzothiophenes are included in large amount. Since dibenzothiophene is known to be stable due to the electronically delocalized structure and to react only with difficulty, the feed used in the present invention preferably does not contain dibenzothiophene too much.

Any hydrocarbon oil may be used as the hydrocarbon oil containing polycyclic aromatic hydrocarbons used as feed for the hydrocracking reaction of the present invention, insofar as the ratio of carbon atoms constituting an aromatic ring to the total number of carbon atoms of the hydrocarbon oil (aromatic ring-constituting carbon ratio) is 35 mol% or more, and the hydrocarbon oil contains 30 vol% or more of fractions having a boiling point of 215°C or more. Specifically, fractions obtained by atmospheric distillation of crude oil, vacuum gas oil obtained by vacuum distillation of atmospheric residue, distillates obtained by various heavy oil cracking processes (catalytic cracker, thermal cracker, etc.) such as catalytic cracking oil (particularly LCO) obtained from a catalytic cracker and thermal cracking oil obtained from a thermal cracker (a coker, a visbreaker, etc.), ethylene cracker heavy residue obtained from an ethylene cracker, catalytic reformate obtained from a catalytic reformer, an aromatic-rich catalytic reformate obtained from the catalytic reformate by further extraction, distillation, or membrane separation ("aromatic-rich catalytic reformate" herein refers to fractions obtained from a catalytic reformer consisting of aromatic compounds with 10 or more carbon numbers and containing 50 vol% or more of aromatic compounds), fractions obtained from an aromatic extraction process for producing lubricating base oil, aromatic-rich fractions obtained from a solvent dewaxing process, and the like can be given. Other hydrocarbon fractions obtained by a desulfurization process or a hydroconversion process (for example, heavy oil cracking processes such as an H-Oil process and an OCR process and a supercritical fluid cracking process of heavy oil) which refines an atmospheric distillation residue, a vacuum distillation residue, a dewaxed oil, oil sand, oil shale, coal, and biomass may be also preferably used.

Distillates obtained by two or more of the above-mentioned refining units in any optional order may also be used as the hydrocarbon feedstock for the hydrocracking reaction. These hydrocarbon feedstocks may be used alone or in combination of two or more insofar as the above-mentioned boiling point range and aromatic ring-constituting carbon ratio are satisfied the definition of hydrocarbon feedstock for the hydrocracking reaction. The hydrocarbon feedstocks having a boiling point range and aromatic ring-constituting carbon ratio outside of the above-mentioned range may also be used by adjusting the boiling point range and the aromatic ring-constituting carbon ratio to fall within the above ranges. Among the above-mentioned hydrocarbon feedstocks, the catalytic cracking oil, thermal cracking oil, vacuum gas oil, ethylene cracker heavy residue, catalytic reformate, and supercritical fluid decomposition oil are preferable, with the light cycle oil (LCO) being particularly preferable.

[Pre-treatment step]

Polycyclic aromatic hydrocarbons are selectively converted into monocyclic aromatic hydrocarbons by hydrocracking in the present invention, and it is also possible to pre-treat the polycyclic aromatic hydrocarbons before the hydrocracking as required. There are many feeds for the hydrocracking reaction as mentioned above, and the contents of the sulfur compounds and nitrogen compounds which is contained in the feeds are also various. The hydrocracking catalyst may not fully function particularly when the concentration of the sulfur compounds and nitrogen compounds is too high. Therefore, it is preferable to previously reduce the sulfur content and the nitrogen content by using a known method as a pre-treatment step prior to the hydrocracking step. As the pre-treatment method, hydrorefining, adsorption separation, sorption separation, oxidation, and the like can be given. Among these, hydrorefining is particularly preferable. When the hydrorefining method is used, the hydrocracking reaction feed is caused to come in contact with a hydrorefining catalyst in the presence of hydrogen at a temperature of preferably 150 to 400°C, more preferably 200 to 380°C, and still more preferably 250 to 360°C, under a pressure preferably of 1 to 10 MPa, and more preferably 2 to 8 MPa, at an liquid hourly space velocity (LHSV) preferably of 0.1 to 10.0 $h^{-1}$, more preferably 0.1 to 8.0 $h^{-1}$, and still more preferably 0.2 to 5.0 $h^{-1}$, at a hydrogen/hydrocarbon oil ratio by volume preferably of 100 to 5,000 NL/L, and more preferably 150 to 3,000 NL/L.

By the above treatment, the sulfur content is reduced preferably to 500 ppm by weight or less, more preferably 100 ppm by weight or less, and particularly preferably 50 ppm by weight or less; and the nitrogen content is reduced preferably to 50 ppm by weight or less, more preferably 20 ppm by weight or less, and particularly preferably 10 ppm by weight. Along with the desulfurization and denitrification by this hydrorefining treatment, hydrogenation of aromatic compounds may be also partially proceeded. In the present invention, reducing the amount of polycyclic aromatic hydrocarbons causes no problem, but it is undesirable to reduce the amount of monocyclic aromatic hydrocarbons. Therefore, it is preferable to treat under the reaction conditions which the hydrogenation can be stopped when the polycyclic aromatic hydrocarbons have been hydrogenated to monocyclic or 1.5-cyclic aromatic hydrocarbons. To this end, it is preferable to control the hydrogenation reaction so that the remaining amount (on a volume basis) of the total aromatic hydrocarbons after the reaction is 0.90 or more of the amount before the reaction, more preferably 0.95 or more, and still more preferably 0.98 or more.

There are no specific limitations to the hydrorefining catalyst used in the pre-treating hydrofinishing step. A catalyst containing at least one metal selected from the Group VI or the Group VIII of the Periodic Table supported on a refractory oxide carrier is preferably used. As specific examples of such a catalyst, catalysts containing at least one metal selected from molybdenum, tungsten, nickel, cobalt, platinum, palladium, iron, ruthenium, osmium, rhodium, and iridium as the Group VI metals or the Group VIII metals of the Periodic Table supported on a carrier comprising at least one selected from alumina, silica, boria, and zeolite can be given. The hydrorefining catalysts are used after treatments such as drying, reducing, sulfiding, and the like before hydrogenation as required. The amount of the catalyst used in the pre-treatment step is preferably from 10 to 200 vol% of the amount of the hydrocracking catalyst. If the amount of the catalyst is 10 vol% or less, the sulfur removal is insufficient; on the other hand, if 200 vol% or more, a large unit is required, which makes it inefficient. The pre-treatment step and the hydrocracking step may be carried out in one reaction column having separate catalyst layers filled with respective catalysts or may be carried out in the separate reaction columns. In order to accelerate the reaction, a hydrogen feed line may be installed between the two catalyst layers, and a gas discharge line for the reacted gas may be installed upstream of the hydrogen feed line to discharge the reacted gas and to introduce fresh hydrogen gas. It is needless to mention that the pre-treatment step and the hydrocracking step may respectively be carried out in separate units.

[Hydrocracking reaction]

In the hydrocracking reaction of the present invention, a hydrocarbon oil is contacted with a hydrocracking catalyst which is described later in detail in the presence of hydrogen to convert 40% or more, preferably 50% or more of the fractions having a boiling point of 215°C or more to fractions having a boiling point of less than 215°C, thereby producing various light hydrocarbon fractions, including monocyclic aromatic hydrocarbons. Specifically, a hydrocracked oil containing 30% or more of the monocyclic aromatic hydrocarbons and other various light hydrocarbon fractions is produced from a hydrocarbon feedstock by converting hydrocarbon fractions having a boiling point higher than a specified temperature in the hydrocarbon feedstock, in other words, by converting polycyclic hydrocarbons into monocyclic aromatic hydrocarbons (alkyl benzenes) by reducing the number of aromatic rings of the polycyclic aromatic hydrocarbons.

The reaction configurations for hydrocracking hydrocarbon oil in the present invention are not particularly limited. A generally used reaction configuration such as a fixed bed, ebullating bed, fluidized bed, moving bed, and the like may be used. Among these, a fixed bed reaction is preferable because of the simple equipment composition and ease of operation.

The hydrocracking catalyst used in the hydrocracking of hydrocarbon oil in the present invention is filled into a reactor and subject to a pre-treatment such as drying, reducing, sulfiding, and the like prior to the use for hydrocracking. These methods of pre-treatment are commonly known to a person having an ordinary skill in the art and carried out in the reaction column or outside of the reaction column by a well-known method. The activation of the catalyst by sulfiding is generally carried out by treating the hydrocracking catalyst in a stream of a mixture of hydrogen and hydrogen sulfide at 150 to 800°C, and preferably 200 to 500°C.

Hydrocracking operation conditions such as reaction temperature, reaction pressure, hydrogen flow rate, liquid hourly space velocity, and the like may be appropriately adjusted according to the properties of the feed, the quality of the product oil, the production amount, and the capability of the refining and post-treatment facilities. The hydrocracking reaction feed is contacted with the hydrocracking catalyst in the presence of hydrogen at a temperature of 200 to 450°C, more preferably 250 to 430°C, and still more preferably 280 to 400°C under a pressure of 2 to 10 MPa, and more preferably 2 to 8 MPa at a LHSV of 0.1 to 10.0 $h^{-1}$, more preferably 0.1 to 8.0 $h^{-1}$, and still more preferably 0.2 to 5.0 $h^{-1}$ at a hydrogen/hydrocarbon oil ratio (by volume) of 100 to 5000 NL/L, and preferably 150 to 3000 NL/L. Polycyclic aromatic hydrocarbons in the hydrocarbon feedstock for the hydrocracking reaction are decomposed and converted into desired monocyclic aromatic hydrocarbons (alkylbenzenes) by hydrocracking under the above conditions. Operation conditions outside the above range are undesirable because of insufficient cracking activities, rapid degradation of the catalyst, and the like.

[Hydrocracking catalyst]

The hydrocracking catalyst of the present invention comprises a carrier made from a composite oxide and a binder which bonds the composite oxide and at least one metal selected from the Group VI and the Group VIII of the periodic table, supported on the carrier. The catalyst is shaped into the form of pellet (cylindrical pellet, particular shaped pellet), granule, sphere, and the like. The catalyst preferably has a specific surface area of 100 to 800 $m^2/g$, a median pore diameter of 3 to 15 nm, and a pore volume occupied by pores with a diameter of 2 to 60 nm of 0.1 to 1.0 mL/g.

The specific surface area is a value of the BET specific surface area which is determined by nitrogen adsorption based on ASTM D3663-78. A more preferable specific surface area is 150 to 700 $m^2/g$, and still more preferably 200 to 600 $m^2/g$. If the BET specific surface area is smaller than the above-mentioned range, dispersion of the active metal is insufficient and the activity is not increased. If the BET specific surface area is larger than the above range on the other hand, sufficient pore volume cannot be retained, thus the reaction products are not sufficiently dispersed, and progress of reaction may be rapidly inhibited, unpreferably.

The median pore diameter of the hydrocracking catalyst is more preferably 0.4 to 12 nm, and particularly preferably 5.0 to 10 nm. The pore volume occupied by pores with a diameter of 2 to 60 nm is more preferably 0.15 to 0.8 mL/g, and particularly preferably 0.2 to 0.7 mL/g. Since there are appropriate ranges for the median pore diameter and pore volume in relation to the size of the molecules involved in the reaction and dispersion of the molecules, either too large or too small values of the median pore diameter or pore volume is not preferable.

Pore characteristics of so-called mesopores, that is, the above mentioned pore diameter and pore volume, can be measured by a nitrogen gas absorption method and the relationship between the pore volume and pore diameter can be calculated by the BJH method or the like. The median pore diameter is defined as a pore diameter corresponding to an accumulated pore volume when the accumulated pore volume is one half of total pore volume (V) in an accumulated pore volume curve obtained by accumulating all of the volume of each pore diameter, wherein the total pore volume (V) is the accumulation of the pore volume occupied by the pores with a diameter of 2 to 60 nm, and determined under a relative pressure of 0.9667 in the nitrogen gas absorption method.

A catalysts having macropores, mesopores, or micropores may be used as the hydrocracking catalyst in the present invention. Since the mesopore characteristics of a composite oxide carrier can be usually maintained until the catalyst is formed, the mesopore characteristics of the hydrocracking catalyst can be basically adjusted by controlling kneading conditions (time, temperature, torque) and calcining conditions (time, temperature, kind and flow rate of circulation gas) so that the composite oxide carrier may have the above mesopore characteristics.

The macropore characteristics may be adjusted by controlling the voids between the composite oxide particles and the content of binder. The voids between the composite oxide particles may be controlled by the diameter of the composite oxide particles and the content may be controlled by the blending amount of binder.

The micropore characteristics largely depend on the pores inherently possessed by composite oxides such as zeolite, but it may also be controlled by dealuminization treatment such as steaming and the like.

The pore characteristics of mesopores and macropores may further be affected by the properties and kneading conditions of the binder which are mentioned later. The composite oxide is mixed with an inorganic oxide matrix (binder) to prepare the carrier.

[Composite oxide]

The composite oxide as used in the present invention refers to a composite oxide with solid acidity. For example, there are known many binary composite oxides, in addition to the composite oxides of which acidity exhibition is confirmed in K. Shibata, T. Kiyoura, J. Kitagawa, K. Tanabe, Bull. Chem. Soc. Jpn., 46, 2985 (1973). Among such composite oxides, silica-alumina, silica-titania, silica-zirconia, and silica-magnesia may be preferably used as a composite oxide used in the present invention. As ternary composite oxides, silica-alumina-titania and silica-alumina-zirconia can be preferably used. The composite oxide as used in the present invention includes zeolite such as a USY zeolite.

Either one or two or more of the composite oxides selected from silica-alumina, silica-titania, silica-zirconia, silica-magnesia, silica-alumina-titania, silica-alumina-zirconia, tungstated zirconia, sulfated zirconia, alumina sulfate, and zeolite may be used alone or in a combination as the composite oxides, respectively. In particular, when silica-alumina is used as the composite oxide, the silica/alumina ratio (molar ratio) is preferably 1 to 20.

Although there are no particular limitations with respect to the zeolite, the zeolite is preferably an X-type, a Y-type, a β-type, an MOR-type, or an MFI-type zeolite, among them a Y-type, a β-type, or an MFI-type zeolite may be particularly suitably used. Among the Y-type zeolites, an acidic zeolite such as H-Y-type zeolite obtained by ion-exchanging the alkali metal is more preferable than the alkali metal type such as a Na-Y-type zeolite. A USY-type zeolite (ultra stable Y-type zeolite) obtained by dealuminization of an H-Y-type zeolite may also be used. The USY-type zeolite is obtained by an acid treatment, a high temperature treatment, a steam treatment, and the like, and is **characterized in that** it has strong resistance against crystalline deterioration, an alkali metal ion content of less than 1.0 wt%, preferably less than 0.5 wt%, a lattice constant of 2.46 nm or less, and a silica/alumina ($SiO_2/Al_2O_3$) molar ratio of 5 or more.

Any H-Y-type zeolite and USY-type zeolite may be used in the present invention without a problem irrespective of the production method insofar as the zeolite has a aluminum : silicon molar ratio of 1:2.0 to 1:10.0 and a faujasite structure. In the present invention, it is preferable that a crystalline aluminosilicate having a lattice constant of 2.43 to 2.46 nm is obtained by dealkalizing the Y-type zeolite in the first instance, followed by a steam treatment and/or an acid treatment. If the lattice constant is more than 2.46 nm, the crystal structure may be collapsed, and the cracking activity of the catalyst and the yield of the aimed fractions decrease when the aluminosilicate is caused to come in contact with an aqueous solution with a pH of less than 3 during the acid treatment described later. The aluminosilicate having a lattice constant of less than 2.43 nm has poor crystallinity and also poor acidity. The catalyst has low cracking activity and produces the objective fractions only at a low yield. The lattice constant is calculated using the lattice spacing d obtained by the X-ray diffraction method according to the following equation.

$$\text{Lattice constant} = d \times (h^2 + k^2 + l^2)^{1/2}$$

wherein h, k, and I are miller's indices.

The dealkalization is carried out by dipping a Y-type zeolite in an ammonia containing solution or the like to ion-exchange an alkali metal such as $Na^+$ with ammonium ions or the like, and calcining the resulting product. In this way a H-Y-type zeolite is firstly obtained, and a USY (ultra stable Y)-type zeolite with a further reduced alkali metal content can be prepared by repeating the above series of treatment several times via an SY (stable Y)-type zeolite. The alkali metal content of dealkalized USY-type zeolite is preferably less than 1.0 wt%, and more preferably less than 0.5 wt%. The steam treatment may be carried out by causing the dealkalized zeolite to come in contact with steam of 500 to 800°C, and preferably 550 to 750°C. The acid treatment may be carried out by dipping the zeolite in an aqueous nitric acid solution with pH3 or less or the like. Either one of the steam treatment and acid treatment may be applied effectively, but crystalline aluminosilicate having the above-mentioned lattice constant may be prepared by partially dealuminizing using in combination of both steam treatment and acid treatment, followed by drying and calcining.
In addition to the Y-type zeolite, an MOR-type zeolite represented by β-type zeolite and mordenite, and an MFI-type zeolite represented by ZSM-5 may also be used. Since these types of zeolites have a high silica/alumina ratio, these may be used without particularly applying a dealuminization treatment.

The crystalline aluminosilicate of which the silica/alumina ratio is adjusted in this manner may be converted into transition metal-containing crystalline aluminosilicate or a rare earth-containing crystalline aluminosilicate by dipping in a solution containing a salt of a transition metal such as iron, cobalt, nickel, molybdenum, tungsten, copper, zinc, chromium, titanium, vanadium, zirconia, cadmium, tin, or lead, or a salt of a rare earth such as lanthanum, cerium, ytterbium, europium, or dysprosium to introduce these metal ions. The crystalline aluminosilicate, transition metal-containing crystalline aluminosilicate, and rare earth-containing crystalline aluminosilicate may be used alone or in combination of two or more thereof when using in the hydrocracking reaction described later.

[Binder]

As a binder, a porous and amorphous material such as alumina, silica-alumina, titania-alumina, zirconia-alumina, boria-alumina, and the like may be suitably used. Of these, alumina, silica-alumina, and boria-alumina are preferable because of the high strength bonding with a composite oxide and high specific surface area. These inorganic oxide not only have a function for supporting an active metal, but also have a function as a binder bonding with the composite oxide and serve to increase the catalyst strength. The specific surface area of the binder is preferably 30 $m^2/g$ or more.

Fine particles of aluminum hydroxide and/or hydrated aluminum oxide (hereinafter may be referred to simply as "alumina powder"), particularly aluminum oxide monohydrate having a boehmite structure such as pseudo-boehmite (hereinafter may be referred to as simply "alumina") may be preferably used as a binder, which is one of the components of the carrier, because of their capability of increasing hydrocracking activity and selectivity. Fine particles of aluminum hydroxide and/or hydrated aluminum oxide containing boria (boron oxide), particularly aluminum oxide mono-hydrate having a boehmite structure such as pseudo-boehmite containing boria may also be preferably used as a binder because of their capability of increasing hydrocracking activity and selectivity.

As aluminum oxide mono-hydrate, commercially available alumina sources (for example, PURAL (registered trademark), CATAPAL (registered trademark), DISPERAL (registered trademark), and DISPAL (registered trademark) commercially produced by SASOL, VERSAL (registered trademark) commercially produced by UOP and HIQ (registered trademark) commercially produced by ALCOA, and the like) may be used. It is also possible to prepare aluminum oxide mono-hydrate by the commonly known method of partially dehydrating aluminum oxide tri-hydrate. When the aluminum oxide mono-hydrate is in the form of gel, the gel may be peptized by water or acidic water. When alumina is synthesized by a precipitation method, a source of acidic aluminum may be selected from aluminium chloride, aluminium sulfate, aluminium nitrate, and the like, and a source of basic aluminum may be selected from sodium aluminate, potassium aluminate, and the like.

The blending amount of the binder is preferably 5 to 70 wt%, and particularly preferably 10 to 60 wt% of the total amount of the composite oxide and the binder constituting the catalyst. If the amount is less than 5 wt%, the mechanical strength of the catalyst tends to decrease; and if more than 70 wt%, hydrocracking activity and selectivity may decrease on the whole. When the USY zeolite is used as a composite oxide, the amount of the USY zeolite is preferably 1 to 80 wt% of the total amount of the composite oxide and the binder forming the catalyst, and particularly preferably 10 to 70 wt%. If the amount is less than 1 wt%, the effect of increase in the hydrocracking activity on basis of the use of the USY zeolite is hardly exhibited; and if more than 80 wt%, the middle distillate selectivity relatively decreases.

[Metal component]

The hydrocracking catalyst of the present invention contains a metal selected from Group VI and Group VIII of the periodic table as an active component. Among the metals of Group VI and Group VIII, molybdenum, tungsten, iron, ruthenium, osmium, cobalt, rhodium, iridium, nickel, palladium, and platinum are particularly preferably used. The metals may be used alone or in combination of two ore more. The metals is preferably added at an amount so that the total amount of the metals of Group VI and Group VIII is preferably 0.05 to 35 wt% of the hydrocracking catalyst, and particularly preferably 0.1 to 30 wt%. When molybdenum is used as a metal, the molybdenum content in the hydrocracking catalyst is preferably 5 to 20 wt%, and particularly preferably 7 to 15 wt%. When tungsten is used as a metal, the tungsten content in the hydrocracking catalyst is preferably 5 to 30 wt%, and particularly preferably 7 to 25 wt%. The amount of molybdenum or tungsten less than the above-mentioned range is undesirable, because the hydrogenation function of the active metal required for the hydrocracking reaction is insufficient. If the amount of molybdenum or tungsten is more than the above-mentioned range, on the other hand, the active metal component unpreferably tends to easily aggregate.

When molybdenum or tungsten is used as the metal, further addition of cobalt or nickel may more preferably increase the hydrogenation function of the active metal. In this instance, the total amount of cobalt or nickel is preferably 0.5 to 10 wt% in the hydrocracking catalyst, and particularly preferably 1 to 7 wt%. When using one or more of the metals among rhodium, iridium, platinum, and palladium, the content of these metals is preferably 0.1 to 5 wt%, and particularly preferably 0.2 to 3 wt%. If the amount is less than the above range, sufficient hydrogenation function cannot be obtained. If the amount is more than the above range, unpreferably the addition efficiency becomes worse, resulting in uneconomical.

The Group VI metal component to be supported on the carrier as an active ingredient may be added by impregnating the carrier with an aqueous solution of a compound such as ammonium paramolybdate, molybdic acid, ammonium molybdate, molybdophosphoric acid, ammonium tungstate, tungstic acid, tungstic anhydride, and tungstophosphoric acid.

As the Group VIII metal component, an aqueous solution of a compound such as nitrate, sulfate, chloride, fluoride, bromide, acetate, carbonate, or phosphate of nickel or cobalt; or an aqueous solution of a compound such as chloroplatinic acid, dichlorotetraammine platinum, tetrachlorohexammine platinum, platinum chloride, platinum iodonium, potassium chloroplatinate, palladium acetate, palladium chloride, palladium nitriate, palladium acetylacetonate, rhodium acetate, rhodium chloride, rhodium nitrate, ruthenium chloride, osmium chloride, iridium chloride, and the like may be used.

Furthermore, phosphorus, boron, potassium and a rare earth such as lanthanum, cerium, ytterbium, europium, and dysprosium may be added as a third component.

[Production method of hydrocracking catalyst]

The hydrocracking catalyst of the present invention can be prepared by forming the carrier from the composite oxide and the binder by kneading, forming the resultant mixture, then drying and calcining the formed mixture, and impregnating the carrier with an aqueous solution of a metal component, followed by drying and calcining. The method of preparing the hydrocracking catalyst of the present invention will be described below, but the method is not limited to the following method. Other methods which can prepare the catalyst possessing the specified pore characteristics and performance may also be used.

Any kneader generally used for catalyst preparation can be used for the above kneading. In general, a method of charging feeds, adding water, and stirring the mixture with stirring blades is suitably used. The addition order of the feeds and additives and the like are not particularly limited. Water is added during kneading, but the water does not need to add when the feed is a slurry. An organic solvent such as ethanol, isopropanol, acetone, methyl ethyl ketone, methyl isobutyl ketone or the like may be added in addition to or instead of water. The kneading temperature and the kneading time may vary depending on the composite oxides and binders used as feeds. There are no particular limitations to the temperature and kneading time insofar as a desired pore structure can be obtained. In a similar way, other components, for example, an acid such as nitric acid, a base such as ammonia, an organic compound such as citric acid and ethylene glycol, a water soluble high molecular compound such as cellulose ethers and polyvinyl alcohol, ceramic fiber, and the like may be added and kneaded to the extent that the properties of the catalyst of the present invention are maintained.

After kneading, the kneaded materials may be formed by a forming method commonly used in catalyst preparation. In particular, the extrusion molding using a screw extruder which can efficiently form the catalyst into any form such as pellets (cylindrical pellets, particular shaped pellets), granules, spheres, and the like, and the oil drop method which can efficiently form into a sphere may be preferably used. Although there are no particular limitations to the size of the formed product, for example, cylindrical pellets with a diameter of 0.5 to 20 mm and a length of 0.5 to 15 mm may be easily obtained.

The formed product obtained in this manner is dried and calcined to obtain a carrier. The calcining may be carried out in a gas atmosphere such as air or nitrogen at a temperature of 300 to 900°C for 0.1 to 20 hours.

There are no particular limitations to the method for supporting the metal component on the carrier. An aqueous solution of the oxide or its salt of the metal to be supported such as a nitrate, an acetate, a carbonate, a phosphate, or a halide is prepared, and the metal component is supported by a spray method, an impregnation method by immersing, an ion-exchange method, and the like. More metal component may be supported by repeating the supporting and drying treatments.

For example, after impregnating the carrier with an aqueous solution containing the Group VI metal component, the carrier is dried at a temperature from room temperature to 150°C, and preferably 100 to 130°C for 0.5 hours or more, or the carrier as is without drying may be successively impregnated with an aqueous solution containing the Group VIII metal component, then dried at a temperature from room temperature to 150°C, and preferably 100 to 130°C for 0.5 hours or more, followed by calcining at 350 to 800°C, and preferably 450 to 600°C for 0.5 hours or more, to obtain a catalyst.

The metal of Group VI or Group VIII supported in the catalyst of the invention may be any form such as a metal, an oxide, a sulfide, or the like.

[Mechanical strength of hydrocracking catalyst and carrier]

The stronger mechanical strength of the hydrocracking catalyst is, the more preferable the catalyst become. For example, a cylindrical pellet with a diameter of 1.6 mm has side crush strength preferably of 3 kg or more, and more preferably 4 kg or more. When preparing the catalyst by supporting the metal component on the formed carrier by impregnation, it is desirable that the formed carrier itself have sufficient mechanical strength in order to produce the catalyst with a high yield. Specifically, as a mechanical strength of the formed carrier in the present invention, a cylindrical pellet with a diameter of 1.6 mm has similarly preferably 3 kg or more of side crush strength, and more preferably 4 kg or more.

The bulk density of the catalyst is preferably 0.4 to 2.0 g/cm$^3$, more preferably 0.5 to 1.5 g/cm$^3$, and particularly preferably 0.6 to 1.2 g/cm$^3$.

[Properties of hydrocracked oil]

In the hydrocracking step, 40 vol% or more of the fractions having a boiling point of 215°C or more in the hydrocarbon feedstocks are converted into fractions having a boiling point of less than 215°C. The content of the fractions having a boiling point of not more than 215°C, that is, hydrocarbon lighter than naphthalene, in the hydrocracked oil is 40 vol% or more, preferably 50 vol% or more, more preferably 60 vol% or more, and particularly preferably 75 vol% or more. The content of monocyclic aromatic hydrocarbons (alkylbenzenes) in the hydrocracked oil obtained by the hydrocracking is preferably 30 vol% or more, more preferably 35 vol% or more, and still more preferably 40 vol% or more; the content of 1.5-cyclic aromatic hydrocarbons is preferably 30 vol% or less, and more preferably 28 vol% or less; and the content of polycyclic aromatic hydrocarbons is preferably 10 vol% or less, more preferably 7 vol% or less, and still more preferably 5 vol% or less.

Furthermore, the ratio of the aromatic ring-constituting carbon ratio of the hydrocracked oil to the aromatic ring-constituting carbon ratio of the feed (aromatic ring carbon remaining ratio) is 0.5 or more, more preferably 0.6 or more, and particularly preferably 0.7 or more. If aromatic ring carbon remaining ratio is smaller than 0.5, it is undesirable that the cracking reaction is excessively progress, which results in coking and reduces the catalyst life.

[Post-treatment step]

A post-treatment step similar to the pre-treatment step may be provided in the method of the present invention as required in order to refine the hydrocracked oil obtained by hydrocracking. Although there are no particular limitations to the post-treatment step, the kind and amount of the catalyst and operating conditions as applied to the pre-treatment step can be applied to the post-treatment step. The post-treatment step may be installed immediately after the hydrocracking step to process the hydrocracked oil, or may be installed after a separation step to separately process each hydrocarbon fraction obtained in the separation step. It is possible to significantly reduce impurities in the product by installing the post-treatment step. For example, the sulfur content and nitrogen content may be reduced to 0.1 ppm by weight or less.

[Separation method of hydrocracked oil]

The obtained hydrocracked oil may be separated into products such as an LPG fraction, a gasoline fraction, a kerosene fraction, a gas oil fraction, a non-aromatic naphtha fraction, and monocyclic aromatic hydrocarbons by an appropriate separation step. Although these fractions as is may be used as LPG, gasoline, kerosene, gas oil or feed for petrochemicals if the petroleum product specification is satisfied, usually these fractions may be used as stocks for producing these petroleum products through blending or refining. There are no particular limitations to the separation process. Any generally known methods such as precision distillation, adsorption separation, sorption separation, extraction separation, membrane separation, and the like may be adopted according to the product properties. The operating conditions thereof may be appropriately selected.

Distillation is a widely-used method, which separates a hydrocracked product oil into, for example, an LPG fraction, a gasoline fraction, a kerosene fraction, and a gas oil fraction by utilizing the difference of boiling point. Specifically, an LPG fraction which is a lighter fraction than a boiling point of around 0 to 30°C; a gasoline fraction having a boiling point higher than the LPG fraction up to around 150 to 215°C; a kerosene fraction having a boiling point higher than the gasoline fraction up to around 215 to 260°C; and a gas oil fraction having a boiling point higher than the kerosene fraction up to around 260 to 370°C can be obtained from the hydrocracked product oil. The factions heavier than the gas oil fraction may be recycled as an unreacted product to be treated again in the hydrocracking step or may be used as a blending stock for fuel oil A and the like.

The extraction method of separating aromatics, which can separate into aromatic component and non-aromatics component using an appropriate solvent, may be used by appropriately combining with the above distillation method. In this case, a gasoline fraction and/or a kerosene fraction obtained by distillation are mixed with a solvent such as sulforane (tetrahydrothiophene dioxide) which selectively extracts aromatics. The mixture is separated into an extract fraction in which aromatic compounds are selectively extracted with sulforane and a raffinate fraction in which paraffin hydrocarbons which are not extracted with sulforane are concentrated, by treating the mixture under extraction conditions of a temperature of 20 to 100°C and a pressure of from normal pressure to 1.0 MPa. Since the extract fraction containing components having a boiling point of at least 80°C or higher obtained by the extraction treatment contains selectively extracted aromatic compounds, this fraction may be used for product as an aromatic stock after hydrorefining if necessary. Since the raffinate fraction contains a relatively large amount of isoparaffins and naphthens, the fraction as is may be used as a gasoline blending stock for producing a high octane gasoline composition, further may be used as a feed for a catalytic reforming and converted into aromatic hydrocarbons.

The aromatic components and sulforane in the extract fraction which is extracted with sulforane may be easily separated by distillation. The separated sulforane may be used again as an extraction solvent. The separated aromatic components may be converted into paraxylene, benzene, and the like having a higher valuable via transalkylation, isomerization, and the like.

[Product hydrocarbons]

As examples of the hydrocarbon products obtained through the above-mentioned separation methods, an LPG fraction with a boiling point of -10 to 30°C, a gasoline fraction with a boiling point of 30 to 215°C, a kerosene fraction with a boiling point of 215 to 260°C, a gas oil fraction with a boiling point of 260 to 370°C, and a residue remaining after separation of these fractions can be given. In the present invention, the smaller the amount of the residue the better. The residue may be lightened by recycling to the hydrocracking step again.

It is also possible to extract the gasoline fraction with a solvent such as sulforane to obtain an extract fraction and a raffinate fraction. The raffinate fraction is a non-aromatic naphtha fraction and is useful as a gasoline stock, a feed of a solvent, and the like. The extract fraction is useful monocyclic aromatic hydrocarbons (alkylbenzenes) as a feed for petrochemicals.

EXAMPLE

The method for producing hydrocarbon fractions of the present invention will be explained in detail and specifically by way of Examples and Comparative Examples below.

[Preparation of hydrocracking catalyst]

1078 g of USY-type zeolite (HSZ-350HUA manufactured by Tosoh Corp.) having an $SiO_2/Al_2O_3$ ratio of 10.5, a lattice constant of 2.439 nm, and a specific surface area of 650 $m^2$/g was mixed with 1303 g of alumina powder (Pural SB manufactured by SASOL Corp.), and 500 mL of 4.0 wt% nitric acid solution, and 875 g of ion exchanged water were added. The mixture was kneaded, extruded into the form of trilobe pellets, dried at 130°C for six hours, and calcined at 600°C for six hours to obtain a carrier.

The carrier was impregnated with an aqueous solution of ammonium molybdate by spraying, dried at 130°C for six hours, impregnated with an aqueous solution of nickel nitrate by spraying, dried at 130°C for six hours, and calcined at 500°C for 30 minutes in an air stream to obtain a catalyst A. The composition (supported metal content) and typical properties of the catalyst A are shown in Table 4.

The pore characteristics of the catalyst A were measured using the nitrogen gas adsorption method to find that the specific surface area was 387 $m^2/g$, the pore volume occupied by pores with a diameter of 2 to 60 nm was 0.543 mL/g, and the median pore diameter was 9.6 nm. The catalyst A had a stable diameter of 1.2 mm, an average length of 4.0 mm, an average side crush strength of 12.0 kg, and a bulk density of 0.668 $g/cm^3$. The stable diameter refers to the height of pellets when fixed to a flat board.

The following devices and methods were used for measuring the catalyst properties.

[Method of measuring pore characteristics]

ASAP 2400 manufactured by Micromeritics was used for measuring the pore characteristics (specific surface area, pore volume occupied by pores with a diameter of 2 to 60 nm, and median pore diameter) by the nitrogen gas adsorption method.

[Method of measuring average side crush strength]

The side crush strength of trilobe samples was measured using a tablet breaking-strength meter, TH-203CP manufactured by Toyama Sangyo Co., Ltd. A round measuring probe with a tip diameter of 5 mm was used. The measuring probe was abutted to and pressed the center of the cylindrical sample to measure the pressure when the sample was broken. The average side crush strength was determined by averaging the results of measurement of 20 randomly selected samples.

Example 1

A light fraction (feed A) prepared by fractionating a light cycle oil (LCO) into two fractions at 240°C was used for a hydrocracking reaction using the catalyst A under a reaction pressure of 3.0 MPa, LHSV of 1.0 $h^{-1}$, hydrogen/oil ratio of 1,400 NL/L, and a reaction temperature of 380°C. The properties of the feed A are shown in Table 1 and the properties of the product oil are shown in Table 2. In Table 2, the conversion rate of 215°C or higher fractions is a value obtained by the following equation.

$$\text{Conversion rate of } 215^{\text{o}}\text{C or higher fractions (\%)} =$$

$$100 - 215^{\text{o}}\text{C or higher fractions in product oil (vol\%) } / \ 215^{\text{o}}\text{C or higher fractions in feed}$$

$$(\text{vol\%}) \times 100$$

Example 2

The hydrocracking reaction was carried out under the same conditions as in Example 1 except for the reaction temperature of 400°C. The properties of the product oil obtained by the reaction are shown in Table 2.

Example 3

The hydrocracking reaction was carried out under the same conditions as in Example 1 except for the LHSV of 0.5 $h^{-1}$. The properties of the product oil obtained by the reaction are shown in Table 2.

Example 4

A hydrocracking reaction was carried out using a feed C (a mixture of 30 vol% of 1-methylnaphthalene, 30 vol% of o-xylene, and 40 vol% of normal dodecane) having properties shown in Table 1 and the catalyst A as the hydrocracking catalyst under a reaction pressure of 3.0 MPa, LHSV of 1.0 $h^{-1}$, hydrogen/oil ratio of 683 NL/L, and a reaction temperature of 380°C. The properties of the product oil obtained by the reaction are shown in Table 2.

Example 5

The hydrocracking reaction was carried out under the same conditions as in Example 4 except for the LHSV of 0.3 h$^{-1}$. The properties of the product oil obtained by the reaction are shown in Table 2.

Comparative Example 1

The hydrocracking reaction was carried out under the same conditions as in Example 1 except for using a feed B (light cycle oil: LCO) having the properties shown in Table 1. The properties of the product oil obtained by the reaction are shown in Table 2.

Comparative Example 2

The hydrocracking reaction was carried out under the same conditions as in Example 2 except for using a feed B (light cycle oil: LCO) having the properties shown in Table 1. The properties of the product oil obtained by the reaction are shown in Table 2.

Comparative Example 3

The hydrocracking reaction was carried out under the same conditions as in Example 3 except for using a feed B (light cycle oil: LCO) having the properties shown in Table 1. The properties of the product oil obtained by the reaction are shown in Table 2.

Comparative Example 4

The hydrocracking reaction was carried out under the same conditions as in Example 4 except for the reaction pressure of 1.0 MPa. The properties of the product oil obtained by the reaction are shown in Table 2.

Comparative Example 5

A reaction was carried out using a feed D (vacuum gas oil of Middle East crude oil: VGO) having properties shown in Table 1 and the catalyst A under a reaction pressure of 4.0 MPa, LHSV of 0.3 h$^{-1}$, a hydrogen/oil ratio of 400 NL/L, and a reaction temperature of 388°C. The properties of the product oil obtained by the reaction are shown in Table 2.
The hydrocracked oils obtained in Examples 1 to 3 and Comparative Example 5 were separated into an LPG fraction (30°C or lower), a gasoline fraction (30 to 215°C), a kerosene fraction (215 to 260°C), a gas oil fraction (260 to 370°C), and a residue by distillation. The yield (vol%) of each fraction of each product oil is shown in Table 3.
TABLE 1

| | | Feed A | Feed B | Feed C | Feed D |
|---|---|---|---|---|---|
| Density | g/cm$^3$ | 0.9018 | 0.9136 | 0.8688 | 0.9357 |
| Sulfur content | wt ppm | 580 | 1380 | 2270 | 23890 |
| Nitrogen content | wt ppm | 143 | 260 | 3.5 | 1210 |
| Bromine number | g-Br$_2$/100g | 5 | 4 | 0.0 | 5.0 |
| Total aromatic hydrocarbons | vol% | 72.2 | 70.9 | 60.0 | 51.7 |
| Monocyclic aromatic hydrocarbons | vol% | 15.1 | 10.4 | 30.0 | 7.3 |
| 1.5-Cyclic aromatic hydrocarbons | vol% | 21.7 | 17.0 | 0 | 13.2 |
| Bicyclic aromatic hydrocarbons | vol% | 35.5 | 37.4 | 30.0 | 18.1 |
| Tri- or larger polycyclic aromatic hydrocarbons | vol% | 0 | 6.0 | 0 | 13.1 |
| Aromatic ring-constituting carbon ratio | mol % | 52.9 | 52.6 | 45.7 | 31.6 |

(continued)

| | | | Feed A | Feed B | Feed C | Feed D |
|---|---|---|---|---|---|---|
| Distillation properties | Initial boiling point (IBP) | °C | 143 | 146.5 | 140 | 196 |
| | 10 vol% Distillate temperature | °C | 200.5 | 206.0 | 145 | 319 |
| | 90 vol% Distillate temperature | °C | 272.5 | 315.50 | 240 | 533 |
| | End point (EP) | °C | 286.0 | 355.5 | 250 | 601 |
| 215°C or higher fractions | | vol% | 73.0 | 80.0 | 70 | 99 |

TABLE 2

| | | | Example | | | | | Comparative Example | | | | |
|---|---|---|---|---|---|---|---|---|---|---|---|---|
| | | | 1 | 2 | 3 | 4 | 5 | 1 | 2 | 3 | 4 | 5 |
| Feed | | | A | A | A | C | C | B | B | B | C | D |
| Hydrocracking catalyst | | | A | A | A | A | A | A | A | A | A | A |
| Reaction temperature | | °C | 380 | 400 | 380 | 380 | 380 | 380 | 400 | 380 | 380 | 388 |
| Reaction pressure | | MPa | 3.0 | 3.0 | 3.0 | 3.0 | 3.0 | 3.0 | 3.0 | 3.0 | 1.0 | 4.0 |
| LHSV | | h⁻¹ | 1.0 | 1.0 | 0.5 | 1.0 | 0.3 | 1.0 | 1.0 | 0.5 | 1.0 | 0.3 |
| Hydrogen/oil ratio | | NL/L | 1400 | 1400 | 1400 | 683 | 683 | 1400 | 1400 | 1400 | 683 | 400 |
| Reaction solution yield | | wt% | 86 | 80 | 84 | 91 | 70 | 89 | 87 | 90 | 98 | 87 |
| Sulfur content | | wt ppm | 2 | 2 | 0.8 | 22 | 7 | 4 | 6 | 4 | 32 | 100 |
| Nitrogen content | | wt ppm | <0.5 | <0.5 | <0.5 | <0.5 | <0.5 | <0.5 | <0.5 | <0.5 | <0.5 | 29 |
| Distillation properties | 10 vol% Distillate temperature | °C | 78.5 | 88.5 | 85.5 | 30.0 | <30.0 | 125.5 | 125.5 | 126.5 | 146.0 | 229.5 |
| | 50 vol% Distillate temperature | °C | 166.0 | 173.0 | 171.5 | 164.0 | 85.0 | 218.0 | 219.5 | 226.0 | 198.0 | 375.0 |
| | 90 vol% Distillate temperature 50 vol% Distillate temperature | °C | 245.0 | 254.5 | 253.0 | 230.0 | 157.0 | 304.0 | 307.5 | 310.0 | 239.0 | 495.0 |
| Conversion rate of 215°C or higher fractions | | % | 69.9 | 63.0 | 64.4 | 52.2 | 90.3 | 35.0 | 33.8 | 30.0 | 2.2 | 7.5 |
| Monocyclic aromatic hydrocarbons | | vol% | 31.0 | 38.7 | 39.0 | 43.0 | 52.0 | 16.9 | 25.0 | 24.3 | 26.5 | 6.8 |
| | Benzene | vol% | 1.2 | 1.6 | 1.5 | 1.9 | 5.3 | 0.7 | 1.0 | 0.9 | 0.2 | 0 |
| | Toluene | vol% | 6.0 | 7.1 | 7.0 | 9.0 | 21.2 | 3.3 | 4.3 | 3.8 | 0.5 | 0 |
| | Xylenes | vol% | 8.2 | 8.2 | 8.7 | 23.7 | 20.5 | 4.8 | 5.2 | 4.9 | 24.9 | 0 |
| | Ortho | vol% | 2.1 | 2.0 | 2.1 | 5.9 | 4.7 | 1.4 | 1.3 | 1.3 | 19.5 | 0 |
| | Meth | vol% | 4.3 | 4.3 | 4.6 | 12.8 | 11.0 | 2.4 | 2.7 | 2.5 | 4.8 | 0 |
| | Para | vol% | 1.8 | 1.9 | 2.0 | 5.0 | 4.8 | 1.0 | 1.2 | 1.1 | 0.6 | 0 |
| | Ethyl benzene | vol% | 1.8 | 1.7 | 1.8 | 0.5 | 0 | 0.6 | 1.1 | 1.0 | 0 | 0 |
| 1.5-Cyclic aromatic hydrocarbons | | vol% | 27.4 | 22.0 | 18.3 | 7.8 | 0.0 | 33.7 | 26.1 | 27.9 | 27.9 | 18.8 |
| Bicyclic aromatic hydrocarbons | | vol% | 8.6 | 6.8 | 4.1 | 0.3 | 0.0 | 16.1 | 13.1 | 10.3 | 9.3 | 13.8 |

(continued)

| | | Example | | | | | Comparative Example | | | | |
|---|---|---|---|---|---|---|---|---|---|---|---|
| | | 1 | 2 | 3 | 4 | 5 | 1 | 2 | 3 | 4 | 5 |
| Tri- or larger polycyclic aromatic hydrocarbons | vol% | 0.3 | 1.2 | 0.9 | 0.0 | 0.0 | 1.8 | 2.3 | 0.8 | 0.0 | 5.9 |
| Aromatic ring-constituting carbon ratio | mol% | 43.6 | 47.1 | 43.4 | 36.9 | 42.2 | 46.1 | 48.5 | 42.9 | 43.6 | 13.7 |
| Aromatic ring carbon remaining ratio | - | 0.82 | 0.89 | 0.82 | 0.81 | 0.92 | 0.87 | 0.92 | 0.82 | 0.95 | 0.43 |

TABLE 3

|  |  | Example 1 | Example 2 | Example 3 | Comparative Example 5 |
|---|---|---|---|---|---|
| LPG fraction | vol% | 27 | 31 | 27 | 13 |
| Gasoline fraction | vol% | 65 | 58 | 60 | 8 |
| Kerosene fraction | vol% | 14 | 16 | 15 | 10 |
| Gas oil fraction | vol% | 5 | 6 | 7 | 32 |
| Residue | vol% | 1 | 1 | 1 | 51 |
| Total | vol% | 112 | 112 | 110 | 114 |

As shown by Examples 1 to 3 in Table 2, it has been confirmed that as compared with the case of using vacuum gas oil which has been widely used as a feed for a hydrocracking reaction (Comparative Example 5), by hydrocracking using hydrocarbon feedstocks having a suitable aromatic ring-constituting carbon ratio and a suitable boiling point range under suitable hydrocracking reaction conditions, target monocyclic aromatic hydrocarbons (alkylbenzenes), particularly BTX fractions such as higher valuable benzene and toluene can be obtained at a high yield. In addition, it can be also understood from Table 3 showing the yield of each fraction obtained from the hydrocracked oils that a higher valuable gasoline fraction can be produced at a high yield, while coproducing an LPG fraction, a gasoline fraction, and kerosene and gas oil fractions and reducing impurities such as sulfur and nitrogen components.

Examples 6 to 10

1,036 g of H-Y-type zeolite (HSZ-350HSA manufactured by Tosoh Corp.) having an $SiO_2/Al_2O_3$ ratio of 5.6, a lattice constant of 2.45 nm, and a specific surface area of 650 $m^2/g$ was mixed with 1,390 g of alumina powder (Versal 250 by UOP Corp.), and 652 mL of 4.0 wt% nitric acid solution and 163 g of ion exchanged water were added. The mixture was kneaded, extruded into the form of trilobe pellets, dried at 130°C for six hours, and calcined at 600°C for one hour to obtain a carrier.
The carrier was impregnated with an aqueous solution of ammonium molybdate by spraying, dried at 130°C for six hours, impregnated with an aqueous solution of nickel nitrate by spraying, dried at 130°C for six hours, and calcined at 500°C for 30 minutes in an air stream to obtain a catalyst B. Properties of catalyst B are shown in Table 4.
Hydrocracking of the feed C was carried out using the catalyst B instead of the catalyst A under the operation conditions shown in the upper part of Table 5 (Examples 6 to 10). The liquid yield and properties of the product oil are shown in Table 5.

Examples 11 to 15

A catalyst C was prepared in the same manner as the catalyst B, except for using 1,202 g of NH$_4$-Y type zeolite (HSZ-341NHA manufactured by Tosoh Corp.) having an $SiO_2/Al_2O_3$ ratio of 6.9, a lattice constant of 2.452 nm, and a specific surface area of 700 $m^2/g$ and 1,202 g of alumina powder (Versal 250 manufactured by UOP Corp.). Properties of the catalyst C are shown in Table 4.
Hydrocracking of Examples 11 to 15 was carried out under the same conditions as in Examples 6 to 10, except for using the catalyst C instead of the catalyst B as shown in the upper part of Table 5. The liquid yield and properties of the product oil are shown in Table 5.

Examples 16 to 19

A catalyst D was prepared in the same manner as the catalyst C, except for using 1,684 g of NH$_4$-Y type zeolite (HSZ-341NHA manufactured by Tosoh Corp.), 834 g of alumina powder (Versal 250 manufactured by UOP Corp.), 500 mL of 4.0 wt% nitric acid solution, and 50 g of ion-exchanged water. Properties of catalyst D are shown in Table 4.
Hydrocracking of Examples 16 to 19 was carried out under the same conditions as in Examples 6 to 9, except for using the catalyst D instead of the catalyst B as shown in the upper part of Table 6. The properties of the product oil are shown in Table 6.

Examples 20 to 24

A catalyst E was prepared in the same manner as the catalyst B, except for using 1,719 g of NH$_4$-β type zeolite (CP814E manufactured by Zeolyst International) having an SiO$_2$/Al$_2$O$_3$ ratio of 23.6 and a specific surface area of 680 m$^2$/g, 834 g of alumina powder (Versal 250 manufactured by UOP Corp.), 500 mL of 4.0 wt% nitric acid solution, and 100 g of ion-exchanged water. Properties of catalyst E are shown in Table 4.
Hydrocracking of Examples 20 to 24 was carried out under the same conditions as in Examples 6 to 10, except for using the catalyst E instead of the catalyst B as shown in the upper part of Table 6. The properties and the like of the product oil are shown in Table 6.

Examples 25 to 29

A catalyst F was prepared in the same manner as the catalyst B, except for using 1,000 g of H-β type zeolite (HSZ-940 HOA manufactured by Tosoh Corp.) having an SiO$_2$/Al$_2$O$_3$ ratio of 36.9 and a specific surface area of 450 m$^2$/g and 1,390 g of alumina powder (Versal 250 manufactured by UOP Corp.). Properties of catalyst F are shown in Table 4.
Hydrocracking of Examples 25 to 29 was carried out under the same conditions as in Examples 6 to 10, except for using the catalyst F instead of the catalyst B as shown in the upper part of Table 7. The properties and the like of the product oil are shown in Table 7.

Examples 30 to 34

A catalyst G was prepared in the same manner as the catalyst F, except for using 1,400 g of H-β type zeolite (HSZ-940 HOA manufactured by Tosoh Corp.), 834 g of alumina powder (Versal 250 manufactured by UOP Corp.), 500 mL of 4.0 wt% nitric acid solution, and 100 g of ion-exchanged water. Properties of catalyst G are shown in Table 4.
Hydrocracking of Examples 30 to 34 was carried out under the same conditions as in Examples 6 to 10, except for using the catalyst G instead of the catalyst B as shown in the upper part of Table 7. The properties and the like of the product oil are shown in Table 7.

Examples 35 to 39

A catalyst H was prepared in the same manner as the catalyst B, except for using 1,533 g of NH$_4$-ZSM-5 zeolite (CBV3020E manufactured by Zeolyst International) having an SiO$_2$/Al$_2$O$_3$ ratio of 30.6 and a specific surface area of 400 m$^2$/g, 834 g of alumina powder (Versal 250 manufactured by UOP Corp.), 500 mL of 4.0 wt% nitric acid solution, and 100 g of ion-exchanged water. Properties of catalyst H are shown in Table 4.
Hydrocracking of Examples 35 to 39 was carried out under the same conditions as in Examples 6 to 10, except for using the catalyst H instead of the catalyst B as shown in the upper part of Table 8. The properties and the like of the product oil are shown in Table 8.

Examples 40 to 44

A catalyst I was prepared in the same manner as the catalyst C, except for using a cobalt nitrate aqueous solution instead of a nickel nitrate aqueous solution.
Properties of catalyst I are shown in Table 4.
Hydrocracking of Examples 40 to 44 was carried out under the same conditions as in Examples 6 to 10, except for using the catalyst I instead of the catalyst B as shown in the upper part of Table 8. The properties and the like of the product oil are shown in Table 8.

Comparative Examples 6 to 10

2,000 g of alumina powder (Pural SB manufactured by SASOL Corp.) was mixed with 363 g of boric acid (manufactured by Kanto Chemical Co., Inc.), and 1,000 mL of 3.0 wt% nitric acid solution and 250 g of ion exchanged water were added. The mixture was kneaded, extruded into cylindrical pellets, dried at 130°C for six hours, and calcined at 600°C for one hour to obtain a carrier.
The carrier was impregnated with an aqueous solution of ammonium molybdate by spraying, dried at 130°C for six hours, impregnated with an aqueous solution of cobalt nitrate by spraying, dried at 130°C for six hours, and calcined at 500°C for 30 minutes in an air stream to obtain a catalyst J. Properties of catalyst J are shown in Table 4.
Hydrocracking of Comparative Examples 6 to 10 was carried out under the same conditions as in Examples 6 to 10, except for using the catalyst J instead of the catalyst A as shown in the upper part of Table 9, and the reaction temperature in Comparative Examples 6 to 8 was respectively 320°C, 350°C, and 380°C. The liquid yield and properties of the product oil are shown in Table 9.

TABLE 4

| | | | | Catalyst | | | | | | | | | |
|---|---|---|---|---|---|---|---|---|---|---|---|---|---|
| | | | | A | B | C | D | E | F | G | H | I | J |
| Hydrocracking catalyst | Carrier | Zeolite | | HSZ-350HUA | HSZ-330HSA | HSZ-341NHA | HSZ-341NHA | CP814E | 940HOA | 940HOA | CBV 3020E | HSZ-341NHA | - |
| | | SiO$_2$/Al$_2$O$_3$ | mol | 10.5 | 5.6 | 6.9 | 6.9 | 23.6 | 39.6 | 39.6 | 30.6 | 6.9 | - |
| | | Amount | wt% | 50 | 50 | 50 | 70 | 70 | 50 | 70 | 70 | 50 | - |
| | | Alumina | | Pural SB | Versal 250 | Versal 250 | Versal 250 | Versal 250 | Versal 250 | Versal 250 | Versal 250 | Versal 250 | Pural SB |
| | | Amount | wt% | 50 | 50 | 50 | 30 | 30 | 50 | 30 | 30 | 50 | 100 |
| | Si | | wt% | 15.8 | 13.8 | 14.5 | 19.9 | 26.3 | 17.8 | 26.6 | 26.9 | 15.0 | 0 |
| | Al | | wt% | 23.5 | 24.0 | 24.7 | 17.3 | 14.5 | 21.1 | 13.4 | 13.9 | 24.7 | 34.8 |
| | Na | | wt% | 0.01 | 0.09 | 0.03 | 0.05 | 0.01 | 0.02 | 0.03 | 0.03 | 0.03 | <0.01 |
| | Mo | | wt% | 7.1 | 7.2 | 7.4 | 7.7 | 7.1 | 7.4 | 7.8 | 7.6 | 9.7 | 10.2 |
| | Ni | | wt% | 3.0 | 2.8 | 2.8 | 2.8 | 3.0 | 2.8 | 3.0 | 3.0 | - | - |
| | Co | | wt% | - | - | - | - | - | - | - | - | 3.1 | 3.2 |
| | Specific surface area | | m$^2$/g | 387 | 396 | 438 | 493 | 402 | 335 | 359 | 280 | 410 | 218 |
| | Pore volume | | cc/g | 0.543 | 0.437 | 0.470 | 0.401 | 0.671 | 0.407 | 1.312 | 0.279 | 0.447 | 0.460 |
| | Median pore diameter | | nm | 9.6 | 6.3 | 6.1 | 4.0 | 12.9 | 6.6 | 4.1 | 5.9 | 6.0 | 7.8 |

TABLE 5

| | | | Example | | | | | | | | | |
|---|---|---|---|---|---|---|---|---|---|---|---|---|
| | | | 6 | 7 | 8 | 9 | 10 | 11 | 12 | 13 | 14 | 15 |
| Feed | | | C | C | C | C | C | C | C | C | C | C |
| Hydrocracking catalyst | | | B | B | B | B | B | C | C | C | C | C |
| Reaction temperature | | °C | 300 | 320 | 350 | 350 | 350 | 300 | 320 | 350 | 350 | 350 |
| Reaction pressure | | MPa | 3.0 | 3.0 | 3.0 | 3.0 | 3.0 | 3.0 | 3.0 | 3.0 | 3.0 | 3.0 |
| LHSV | | h⁻¹ | 1.0 | 1.0 | 1.0 | 1.5 | 0.5 | 1.0 | 1.0 | 1.0 | 1.5 | 0.5 |
| Hydrogen/oil ratio | | NL/L | 1365 | 1365 | 1365 | 1365 | 1365 | 1365 | 1365 | 1365 | 1365 | 1365 |
| Reaction solution yield | | wt% | 98 | 99 | 93 | 96 | 81 | 96 | 98 | 89 | 93 | 65 |
| Sulfur content | | wt ppm | 6 | 4 | 3 | 2 | 3 | 2 | 1 | 0.8 | 0.4 | 3 |
| Nitrogen content | | wt ppm | <0.5 | <0.5 | <0.5 | <0.5 | <0.5 | <0.5 | <0.5 | <0.5 | <0.5 | <0.5 |
| Distillation properties | 10 vol% Distillate temperature | °C | 139.0 | 138.0 | 74.0 | 110.0 | <30.0 | 139.0 | 110.0 | <30.0 | 85.0 | <30.0 |
| | 50 vol% Distillate temperature | °C | 208.0 | 208.0 | 199.0 | 207.0 | 137.0 | 208.0 | 206.0 | 144.0 | 203.0 | 66.0 |
| | 90 vol% Distillate temperature | °C | 217.0 | 217.0 | 216.0 | 216.0 | 212.0 | 216.0 | 217.0 | 214.0 | 216.0 | 169.0 |
| Conversion rate of 215°C or higher fractions | | % | 46 | 41 | 59 | 65 | 81 | 65 | 51 | 76 | 68 | 100 |
| Monocyclic aromatic hydrocarbons | | vol% | 35.4 | 36.4 | 41.3 | 38.9 | 41.3 | 39.8 | 40.3 | 40.6 | 40.4 | 36.4 |
| | Benzene | vol% | 0.3 | 0.5 | 1.3 | 0.8 | 2.6 | 0.4 | 0.8 | 2.0 | 1.3 | 3.2 |
| | Toluene | vol% | 1.6 | 2.6 | 6.3 | 3.8 | 12.6 | 2.6 | 4.0 | 9.1 | 5.9 | 13.6 |
| | Xylenes | vol% | 27.7 | 25.7 | 25.4 | 27.9 | 18.1 | 27.1 | 26.5 | 21.5 | 26.3 | 14.4 |
| | | Ortho | vol% | 15.0 | 11.6 | 8.3 | 13.6 | 4.1 | 12.5 | 10.6 | 6.1 | 12.1 | 3.2 |
| | | Meth | vol% | 10.9 | 11.6 | 13.0 | 11.6 | 9.9 | 12.2 | 12.7 | 11.4 | 11.3 | 7.8 |
| | | Para | vol% | 1.8 | 2.5 | 4.1 | 2.7 | 4.1 | 2.4 | 3.2 | 4.0 | 2.9 | 3.4 |
| | Ethyl benzene | vol% | 0 | 0.1 | 0.3 | 0.1 | 0.5 | 0.1 | 0.1 | 0.4 | 0.3 | 0 |
| 1.5-Cyclic aromatic hydrocarbons | | vol% | 13.2 | 16.2 | 11.4 | 15.8 | 5.4 | 14.0 | 12.3 | 8.2 | 12.7 | 0 |
| Bicyclic aromatic hydrocarbons | | vol% | 0.3 | 0.3 | 0.2 | 0.6 | 0 | 0.2 | 1.0 | 0.6 | 0.4 | 0 |
| Tri- or larger polycyclic aromatic hydrocarbons | | vol% | 0 | 0 | 0 | 0 | 0 | 0 | 0 | 0 | 0 | 0 |

(continued)

| | | Example | | | | | | | | | |
|---|---|---|---|---|---|---|---|---|---|---|---|
| | | 6 | 7 | 8 | 9 | 10 | 11 | 12 | 13 | 14 | 15 |
| Aromatic ring-constituting carbon ratio | mol% | 30.5 | 34.0 | 34.5 | 36.0 | 35.6 | 34.7 | 33.2 | 34.2 | 34.4 | 36.6 |
| Aromatic ring carbon remaining ratio | - | 0.67 | 0.74 | 0.76 | 0.79 | 0.78 | 0.76 | 0.73 | 0.75 | 0.75 | 0.80 |

TABLE 6

| | | | Example | | | | | | | | |
|---|---|---|---|---|---|---|---|---|---|---|---|
| | | | 16 | 17 | 18 | 19 | 20 | 21 | 22 | 23 | 24 |
| Feed | | | C | C | C | C | C | C | C | C | C |
| Hydrocracking catalyst | | | D | D | D | D | E | E | E | E | E |
| Reaction temperature | | °C | 300 | 320 | 350 | 350 | 300 | 320 | 350 | 350 | 350 |
| Reaction pressure | | MPa | 3.0 | 3.0 | 3.0 | 3.0 | 3.0 | 3.0 | 3.0 | 3.0 | 3.0 |
| LHSV | | h$^{-1}$ | 1.0 | 1.0 | 1.0 | 1.5 | 1.0 | 1.0 | 1.0 | 1.5 | 0.5 |
| Hydrogen/oil ratio | | NL/L | 1365 | 1365 | 1365 | 1365 | 1365 | 1365 | 1365 | 1365 | 1365 |
| Reaction solution yield | | wt% | 90 | 91 | 83 | 91 | 97 | 77 | 69 | 75 | 65 |
| Sulfur content | | wt ppm | 3 | 2 | 2 | 0.8 | 3 | 3 | 6 | 7 | 2 |
| Nitrogen content | | wt ppm | <0.5 | <0.5 | <0.5 | <0.5 | <0.5 | <0.5 | <0.5 | <0.5 | <0.5 |
| Distillation properties | 10 vol% Distillate temperature | °C | 139.0 | 110.0 | <30.0 | 34.0 | 59.0 | <30.0 | <30.0 | <30.0 | <30.0 |
| | 50 vol% Distillate temperature | °C | 207.0 | 203.0 | 130.0 | 189.0 | 144.0 | 81.0 | 105.0 | 90.0 | 104.0 |
| | 90 vol% Distillate temperature | °C | 217.0 | 216.0 | 214.0 | 216.0 | 220.0 | 143.0 | 166.0 | 164.0 | 165.0 |
| Conversion rate of 215°C or higher fractions | | % | 40 | 59 | 81 | 65 | 51 | 97 | 100 | 92 | 100 |
| Monocyclic aromatic hydrocarbons | | vol% | 38.1 | 41.9 | 40.3 | 41.9 | 39.7 | 50.1 | 68.5 | 50.2 | 69.6 |
| | Benzene | vol% | 0.5 | 1.2 | 2.7 | 1.7 | 0.7 | 2.9 | 3.2 | 2.3 | 4.0 |
| | Toluene | vol% | 2.9 | 5.6 | 12.7 | 7.9 | 1.8 | 10.9 | 17.1 | 9.2 | 21.0 |
| | Xylenes | vol% | 25.2 | 25.6 | 17.3 | 24.0 | 31.0 | 27.0 | 26.7 | 30.6 | 27.6 |
| | | Ortho | vol% | 10.6 | 8.1 | 3.9 | 8.4 | 13.0 | 6.1 | 6.1 | 7.5 | 6.2 |
| | | Meth | vol% | 12.1 | 13.6 | 9.5 | 12.0 | 14.4 | 14.7 | 14.3 | 16.2 | 14.9 |
| | | Para | vol% | 2.5 | 3.9 | 3.9 | 3.6 | 3.6 | 6.2 | 6.3 | 6.9 | 6.5 |
| | Ethyl benzene | vol% | 0.1 | 0.2 | 0.6 | 0.4 | 0.2 | 1.4 | 1.6 | 1.2 | 1.2 |
| 1.5-Cyclic aromatic hydrocarbons | | vol% | 13.6 | 7.3 | 2.8 | 7.7 | 22.5 | 2.2 | 0 | 4.7 | 0 |
| Bicyclic aromatic hydrocarbons | | vol% | 0.2 | 0 | 0 | 0.2 | 0.4 | 0 | 0 | 0.5 | 0 |
| Tri- or larger polycyclic aromatic hydrocarbons | | vol% | 0 | 0 | 0 | 0 | 0 | 0 | 0 | 0 | 0 |

| | | Example | | | | | | | | |
|---|---|---|---|---|---|---|---|---|---|---|
| | | 16 | 17 | 18 | 19 | 20 | 21 | 22 | 23 | 24 |
| Aromatic ring-constituting carbon ratio | mol% | 32.1 | 31.3 | 32.9 | 33.3 | 43.8 | 53.3 | 65.4 | 55.4 | 64.1 |
| Aromatic ring carbon remaining ratio | - | 0.70 | 0.68 | 0.72 | 0.73 | 0.96 | 1.17 | 1.43 | 1.21 | 1.40 |

TABLE 7

| | | | Example | | | | | | | | | |
|---|---|---|---|---|---|---|---|---|---|---|---|---|
| | | | 25 | 26 | 27 | 28 | 29 | 30 | 31 | 32 | 33 | 34 |
| Feed | | | C | C | C | C | C | C | C | C | C | C |
| Hydrocracking catalyst | | | F | F | F | F | F | G | G | G | G | G |
| Reaction temperature | | °C | 300 | 320 | 350 | 350 | 350 | 300 | 320 | 350 | 350 | 350 |
| Reaction pressure | | MPa | 3.0 | 3.0 | 3.0 | 3.0 | 3.0 | 3.0 | 3.0 | 3.0 | 3.0 | 3.0 |
| LHSV | | h$^{-1}$ | 1.0 | 1.0 | 1.0 | 1.5 | 0.5 | 1.0 | 1.0 | 1.0 | 1.5 | 0.5 |
| Hydrogen/oil ratio | | NL/L | 1365 | 1365 | 1365 | 1365 | 1365 | 1365 | 1365 | 1365 | 1365 | 1365 |
| Reaction solution yield | | wt% | 94 | 86 | 77 | 73 | 63 | 99 | 82 | 76 | 74 | 74 |
| Sulfur content | | wt ppm | 2 | 2 | 0.6 | 0.5 | 3 | 2 | 2 | 3 | 2 | 1 |
| Nitrogen content | | wt ppm | <0.5 | <0.5 | <0.5 | <0.5 | <0.5 | <0.5 | <0.5 | <0.5 | <0.5 | <0.5 |
| Distillation properties | 10 vol% Distillate temperature | °C | 83.0 | <30.0 | <30.0 | <30.0 | <30.0 | 109.0 | <30.0 | <30.0 | <30.0 | <30.0 |
| | 50 vol% Distillate temperature | °C | 197.0 | 115.0 | 119.0 | 85.0 | 104.0 | 203.0 | 109.0 | 128.0 | 86.0 | 119.0 |
| | 90 vol% Distillate temperature | °C | 215.0 | 202.0 | 165.0 | 150.0 | 166.0 | 216.0 | 173.0 | 168.0 | 161.0 | 169.0 |
| Conversion rate of 215°C or higher fractions | | % | 73 | 89 | 100 | 97 | 100 | 68 | 92 | 100 | 95 | 100 |
| Monocyclic aromatic hydrocarbons | | vol% | 40.9 | 46.5 | 69.9 | 50.1 | 66.7 | 38.5 | 48.8 | 75.9 | 49.2 | 73.4 |
| | Benzene | vol% | 0.7 | 1.6 | 2.3 | 2.3 | 2.7 | 0.5 | 2.1 | 2.6 | 2.2 | 2.7 |
| | Toluene | vol% | 1.5 | 6.4 | 15.1 | 10.6 | 16.4 | 1.1 | 8.6 | 16.7 | 9.5 | 16.9 |
| | Xylenes | vol% | 30.2 | 28.1 | 28.8 | 26.8 | 26.5 | 31.2 | 27.4 | 30.0 | 28.0 | 28.4 |
| | Ortho | vol% | 12.5 | 7.4 | 6.7 | 6.4 | 6.1 | 14.0 | 6.5 | 6.9 | 7.0 | 6.5 |
| | Meth | vol% | 14.2 | 15.5 | 15.4 | 14.5 | 14.2 | 13.9 | 15.2 | 15.9 | 14.9 | 15.2 |
| | Para | vol% | 3.5 | 5.2 | 6.7 | 5.9 | 6.2 | 3.3 | 5.7 | 7.2 | 6.1 | 6.7 |
| | Ethyl benzene | vol% | 0.2 | 0.9 | 1.7 | 1.4 | 1.3 | 0.2 | 1.3 | 1.9 | 1.3 | 1.7 |
| 1.5-Cyclic aromatic hydrocarbons | | vol% | 19.2 | 10.7 | 0 | 2.2 | 0 | 18.5 | 6.1 | 0 | 3.2 | 0 |
| Bicyclic aromatic hydrocarbons | | vol% | 0.1 | 0.1 | 0 | 0 | 0 | 0.4 | 0.1 | 0 | 0.2 | 0 |
| Tri- or larger polycyclic aromatic hydrocarbons | | vol% | 0 | 0 | 0 | 0 | 0 | 0 | 0 | 0 | 0 | 0 |

| | | Example | | | | | | | | | |
|---|---|---|---|---|---|---|---|---|---|---|---|
| | | 25 | 26 | 27 | 28 | 29 | 30 | 31 | 32 | 33 | 34 |
| Aromatic ring-constituting carbon ratio | mol% | 41.2 | 50.7 | 64.3 | 53.5 | 63.6 | 37.5 | 51.6 | 66.8 | 53.5 | 66.0 |
| Aromatic ring carbon remaining ratio | - | 0.90 | 1.11 | 1.41 | 1.17 | 1.39 | 0.82 | 1.13 | 1.46 | 1.17 | 1.44 |

TABLE 8

| | | | Example | | | | | | | | | |
|---|---|---|---|---|---|---|---|---|---|---|---|---|
| | | | 35 | 36 | 37 | 38 | 39 | 40 | 41 | 42 | 43 | 44 |
| Feed | | | C | C | C | C | C | C | C | C | C | C |
| Hydrocracking catalyst | | | H | H | H | H | H | I | I | I | I | I |
| Reaction temperature | | °C | 300 | 320 | 350 | 350 | 350 | 300 | 320 | 350 | 350 | 350 |
| Reaction pressure | | MPa | 3.0 | 3.0 | 3.0 | 3.0 | 3.0 | 3.0 | 3.0 | 3.0 | 3.0 | 3.0 |
| LHSV | | $h^{-1}$ | 1.0 | 1.0 | 1.0 | 1.5 | 0.5 | 1.0 | 1.0 | 1.0 | 1.5 | 0.5 |
| Hydrogen/oil ratio | | NL/L | 1365 | 1365 | 1365 | 1365 | 1365 | 1365 | 1365 | 1365 | 1365 | 1365 |
| Reaction solution yield | | wt% | 70 | 31 | 41 | 32 | 39 | 100 | 100 | 96 | 98 | 80 |
| Sulfur content | | wt ppm | 4 | 61 | 14 | 3 | 1 | 3 | 1 | 2 | 3 | 2 |
| Nitrogen content | | wt ppm | <0.5 | <0.5 | <0.5 | <0.5 | <0.5 | <0.5 | <0.5 | <0.5 | <0.5 | <0.5 |
| Distillation properties | 10 vol% Distillate temperature | °C | <30.0 | <30.0 | <30.0 | <30.0 | <30.0 | 139.0 | 137.0 | 59.0 | 109.0 | <30.0 |
| | 50 vol% Distillate temperature | °C | 138.0 | <30.0 | 84.0 | <30.0 | 38.0 | 208.0 | 207.0 | 198.0 | 206.0 | 137.0 |
| | 90 vol% Distillate temperature | °C | 220.0 | 103.0 | 139.0 | 105.0 | 110.0 | 220.0 | 220.0 | 216.0 | 216.0 | 212.0 |
| Conversion rate of 215°C or higher fractions | | % | 65 | 100 | 100 | 100 | 100 | 40 | 41 | 59 | 65 | 81 |
| Monocyclic aromatic hydrocarbons | | vol% | 61.1 | 31.7 | 70.6 | 39.9 | 60.7 | 37.1 | 39.3 | 42.1 | 38.8 | 39.9 |
| | Benzene | vol% | 2.4 | 5.3 | 9.3 | 8.7 | 13.1 | 0.3 | 0.6 | 1.5 | 0.9 | 2.6 |
| | Toluene | vol% | 11.6 | 17.5 | 29.2 | 23.6 | 35.3 | 1.8 | 3.2 | 7.1 | 4.3 | 12.3 |
| | Xylenes | vol% | 35.6 | 8.8 | 26.2 | 7.6 | 12.4 | 27.2 | 27.0 | 25.2 | 27.3 | 17.2 |
| | | Ortho | vol% | 7.5 | 0 | 5.6 | 0 | 0 | 15.1 | 11.8 | 8.2 | 13.4 | 4.0 |
| | | Meth | vol% | 20.3 | 8.8 | 14.2 | 7.6 | 12.4 | 10.5 | 12.5 | 13.0 | 11.3 | 9.3 |
| | | Para | vol% | 7.8 | 0 | 6.4 | 0 | 0 | 1.6 | 2.7 | 4.0 | 2.6 | 3.9 |
| | Ethyl benzene | vol% | 1.5 | 0 | 0 | 0 | 0 | 0 | 0.3 | 0.3 | 0.2 | 0.5 |
| 1.5-Cyclic aromatic hydrocarbons | | vol% | 17.2 | 0 | 0 | 0 | 0 | 17.6 | 14.6 | 9.9 | 15.3 | 4.8 |
| Bicyclic aromatic hydrocarbons | | vol% | 0.2 | 0 | 0 | 0 | 0 | 0.3 | 0.3 | 0.2 | 0.7 | 0 |
| Tri- or larger polycyclic aromatic hydrocarbons | | vol% | 0 | 0 | 0 | 0 | 0 | 0 | 0 | 0 | 0 | 0 |

(continued)

| | | Example | | | | | | | | | |
|---|---|---|---|---|---|---|---|---|---|---|---|
| | | 35 | 36 | 37 | 38 | 39 | 40 | 41 | 42 | 43 | 44 |
| Aromatic ring-constituting carbon ratio | mol% | 57.3 | 63.0 | 77.0 | 69.0 | 75.3 | 35.2 | 33.5 | 34.8 | 35.7 | 34.3 |
| Aromatic ring carbon remaining ratio | - | 1.25 | 1.38 | 1.68 | 1.51 | 1.65 | 0.77 | 0.73 | 0.76 | 0.78 | 0.75 |

TABLE 9

|  |  |  | Comparative Example | | | | |
|---|---|---|---|---|---|---|---|
|  |  |  | 6 | 7 | 8 | 9 | 10 |
| Feed |  |  | C | C | C | C | C |
| Hydrocracking catalyst |  | °C | J | J | J | J | J |
| Reaction temperature |  | °C | 320 | 350 | 380 | 350 | 350 |
| Reaction pressure |  | MPa | 3.0 | 3.0 | 3.0 | 3.0 | 3.0 |
| LHSV |  | h$^{-1}$ | 1.0 | 1.0 | 1.0 | 1.5 | 0.5 |
| Hydrogen/oil ratio |  | NL/L | 1365 | 1365 | 1365 | 1365 | 1365 |
| Reaction solution yield |  | wt% | 83 | 84 | 83 | 90 | 70 |
| Sulfur content |  | wt ppm | 8 | 7 | 6 | 3 | 15 |
| Nitrogen content |  | wt ppm | <0.5 | <0.5 | <0.5 | <0.5 | <0.5 |
| Distillation properties | 10 vol% Distillate temperature | °C | 141.0 | 141.0 | 141.0 | 141.0 | 143.0 |
|  | 50 vol% Distillate temperature | °C | 210.0 | 211.0 | 209.0 | 212.0 | 209.0 |
|  | 90 vol% Distillate temperature | °C | 228.0 | 232.0 | 233.0 | 238.0 | 224.0 |
| Conversion rate of 215°C or higher fractions |  | % | 27 | 27 | 32 | 3 | 46 |
| Monocyclic aromatic hydrocarbons |  | vol% | 28.9 | 29.9 | 30.6 | 25.6 | 33.2 |
|  | Benzene |  | vol% | 0 | 0 | 0.1 | 0 | 0.1 |
|  | Toluene |  | vol% | 0 | 0.1 | 0.2 | 0 | 0.1 |
|  | Xylenes |  | vol% | 26.1 | 26.4 | 26.6 | 23.9 | 28.7 |
|  |  | Ortho | vol% | 25.8 | 26.1 | 25.7 | 23.7 | 28.0 |
|  |  | Meth | vol% | 0.3 | 0.3 | 0.8 | 0.2 | 0.6 |
|  |  | Para | vol% | 0 | 0 | 0.1 | 0 | 0.1 |
|  | Ethyl benzene |  | vol% | 0 | 0 | 0 | 0 | 0 |
| 1.5-Cyclic aromatic hydrocarbons |  | vol% | 24.7 | 23.0 | 24.0 | 29.0 | 20.1 |
| Bicyclic aromatic hydrocarbons |  | vol% | 1.6 | 3.7 | 5.2 | 8.4 | 2.4 |
| Tri- or larger polycyclic aromatic hydrocarbons |  | vol% | 0 | 0 | 0 | 0 | 0 |
| Aromatic ring-constituting carbon ratio |  | mol% | 30.7 | 32.9 | 38.3 | 37.9 | 34.6 |
| Aromatic ring carbon remaining ratio |  | - | 0.67 | 0.72 | 0.84 | 0.83 | 0.76 |

Examples 45 to 47

The hydrocracking reactions were carried out under the same conditions as in Example 4, except for the LHSV of 0.5 h$^{-1}$, the hydrogen/oil ratio of 1365 NL/L, the reaction temperature of 320°C, and the reaction pressure of 5.0 MPa in Example 45, the reaction pressure of 7.0 MPa in Example 46, and the reaction pressure of 9.0 MPa in Example 47. The properties of the product oil are shown in Table 10.

TABLE 10

| | | | Example | | |
|---|---|---|---|---|---|
| | | | 45 | 46 | 47 |
| Feed | | | C | C | C |
| Hydrocracking catalyst | | | A | A | A |
| Reaction temperature | | °C | 320 | 320 | 320 |
| Reaction pressure | | MPa | 5.0 | 7.0 | 9.0 |
| LHSV | | h⁻¹ | 0.5 | 0.5 | 0.5 |
| Hydrogen/oil ratio | | NL/L | 1365 | 1365 | 1365 |
| Reaction solution yield | | wt% | 85 | 84 | 85 |
| Sulfur content | | wt ppm | 13 | 7 | 4 |
| Nitrogen content | | wt ppm | <0.5 | <0.5 | <0.5 |
| Distillation properties | 10 vol% Distillate temperature | °C | 121.0 | 110.5 | 110.5 |
| | 50 vol% Distillate temperature | °C | 207.0 | 203.0 | 203.0 |
| | 90 vol% Distillate temperature | °C | 215.0 | 214.5 | 215.0 |
| Conversion rate of 215°C or higher fractions | | % | 84 | 89 | 86 |
| Monocyclic aromatic hydrocarbons | | vol% | 32.5 | 35.4 | 34.5 |
| | Benzene | vol% | 0.8 | 1.2 | 1.1 |
| | Toluene | vol% | 3.2 | 4.9 | 4.5 |
| | Xylenes | vol% | 18.5 | 18.7 | 18.2 |
| | | Ortho | vol% | 7.2 | 5.7 | 5.6 |
| | | Meth | vol% | 9.3 | 10.2 | 9.9 |
| | | Para | vol% | 2.0 | 2.8 | 2.7 |
| | Ethyl benzene | vol% | 0.1 | 0.2 | 0.2 |
| 1.5-Cyclic aromatic hydrocarbons | | vol% | 6.8 | 5.4 | 5.4 |
| Bicyclic aromatic hydrocarbons | | vol% | 0 | 0.1 | 0 |
| Tri- or larger polycyclic aromatic hydrocarbons | | vol% | 0 | 0 | 0 |
| Aromatic ring-constituting carbon ratio | | mol% | 28.6 | 30.9 | 30.0 |
| Aromatic ring carbon remaining ratio | | - | 0.63 | 0.68 | 0.66 |

As clearly shown by Examples 6 to 47 in Tables 5 to 8, and 10, it has been confirmed that as compared with the case of using a conventional hydrocracking catalyst which has been widely used for hydrocracking reaction (Comparative Examples 6 to 10), hydrocracking of specific hydrocarbon feedstocks using a suitable hydrocracking catalyst can effectively proceed the conversion of bicyclic aromatic hydrocarbons to desired monocyclic aromatic hydrocarbons (alkylbenzenes), and particularly high value-added BTX fractions such as benzene and toluene can be obtained at a high yield. It can also be seen that the hydrocracking is effective for reducing impurities such as sulfur and nitrogen components.

The properties of the feeds and product oils in the above Examples and Comparative Examples were analyzed using the following methods.
The density was measured according to the oscillating density test method of JIS K2249, and the distillation characteristics were measured according to the atmospheric distillation test method of JIS K2254.

The aromatic ring-constituting carbon ratio was measured by a nuclear magnetic resonance (NMR) analyzer (GSX270 manufactured by JEOL Ltd.) using deuteriochloroform as a solvent and tetramethylsilane (0 ppm) as an internal standard.
The aromatic ring-constituting carbons and aliphatic structure-forming carbons for each carbon-type group were quantitatively determined by calculating from the integration ratio of signals of the Fourier transformed spectrum based on the measurement under the conditions of an SGNNE mode, 32768 data points, observed frequency domain width of 27027 Hz, a pulse width of 2 $\mu$s, a pulse waiting time of 30 S and Number of Excitations of 2000 times. The carbon atoms having 120 to 150 ppm shift values in the resulting spectrum are deemed to belong to aromatic carbons and indicated by mol% of the total carbon atoms.

The composition of monocyclic aromatic hydrocarbons (alkylbenzenes) (benzene, toluene, and xylenes) and the composition of 1.5-cyclic aromatic hydrocarbons (tetralins) were measured by a total hydrocarbon composition analyzer (manufactured by Shimadzu Corp.) and calculated according to JIS K2536.

The type analysis (ring analysis) of aromatic compounds was carried out according to the method of Japan Petroleum Institute (JPI-5S-49-97) using high performance liquid chromatography (HPLC), in which n-hexane was used as a mobile phase and the RI method was used as a detector.

The sulfur content was measured according to JIS K2541 Determination of sulfur content, in which X-ray fluorescence method was applied to a high concentration sample and the coulometric microtitration was applied to a low concentration sample. The nitrogen content was analyzed by the chemiluminescence method according to JIS K2609 Determination of nitrogen content.

The bromine number was determined by the electrometric titration according to JIS K2605 Determination of bromine number.

## INDUSTRIAL APPLICABILITY

As mentioned above, according to the present invention polycyclic aromatic hydrocarbons which have been used only for a fuel such as heavy oil or gas oil can be effectively and selectively converted into monocyclic aromatic hydrocarbons, which are higher valuable alkylbenzenes, by hydrocracking specific feedstocks under specific operating conditions without problems such as coking. Therefore, it is possible to use the fractions which have not been used as a feed for monocyclic aromatic hydrocarbons, and thus to utilize petroleum resources effectively.

## Claims

1. A method for producing hydrocarbon fractions comprising a step of catalytically hydrocracking a hydrocarbon feedstock containing polycyclic aromatic hydrocarbons and having not less than 35 mol% of an aromatic ring-constituting carbon ratio, which is the ratio of carbon atoms constituting aromatic rings to the total number of carbon atoms of the hydrocarbon oil, in the presence of hydrogen to convert not less than 40% of the fractions having a boiling point of not less than 215°C to fractions having a boiling point of less than 215°C and produce a hydrocracked oil containing 30 vol% or more of monocyclic aromatic hydrocarbons.

2. The method according to claim 1, wherein the operating conditions in the hydrocracking step are 2 to 10 MPa of a pressure, 200 to 450°C of a temperature, 0.1 to 10.0 $h^{-1}$ of a LHSV, 100 to 5000 NL/L of a hydrogen/oil ratio, and not less than 0.5 of an aromatic ring carbon remaining ratio, which is the ratio of the aromatic ring-constituting carbon ratio of the hydrocracked oil to the aromatic ring-constituting carbon ratio of the hydrocarbon feedstock.

3. The method according to claim 1 or 2, wherein the hydrocarbon feedstock is a hydrocarbon oil fraction obtained from a catalytic cracker, a thermal cracker, an ethylene cracker, a supercritical fluid cracker, or a catalytic reformer or a mixture of two or more of these hydrocarbon oil fractions.

4. The method according to any one of claims 1 to 3, wherein the hydrocarbon feedstock has distillation properties of a 10 vol% distillate temperature of 140 to 230°C and a 90 vol% distillate temperature of 230 to 600°C.

5. The method according to any one of claims 1 to 4, further comprising a separation step of obtaining at least two hydrocarbon fractions selected from an LPG fraction, a gasoline fraction, a kerosene fraction, a gas oil fraction, a non-aromatic naphtha fraction, and a monocyclic aromatic hydrocarbons from a hydrocracked oil obtained by hydrocracking.

6. The method according to any one of claims 1 to 5, wherein the hydrocracking catalyst comprises a carrier which comprises a composite oxide and a binder combining the composite oxide and at least one metal selected from the Group VI metals and Group VIII metals of the periodic table supported on the carrier, and has properties of a specific surface area of 100 to 800 $m^2$/g, a median pore diameter of 3 to 15 nm, and a pore volume occupied by pores with a pore diameter of 2 to 60 nm of 0.1 to 1.0 mL/g.

7. The method according to claim 6, wherein the composite oxide contains at least one of silica-alumina, silica-titania, silica-zirconia, silica-magnesia, silica-alumina-titania, silica-alumina-zirconia, tungstated zirconia, sulfated zirconia, and zeolite.

8. The method according to claim 6, wherein the binder comprises at least one of alumina, silica-alumina, and boria-alumina.

| | International application No. |
|---|---|
| **INTERNATIONAL SEARCH REPORT** | PCT/JP2007/000529 |

A.  CLASSIFICATION OF SUBJECT MATTER
*C10G47/12*(2006.01)i, *B01J29/16*(2006.01)i, *B01J29/48*(2006.01)i, *B01J29/78* (2006.01)i, *B01J35/10*(2006.01)i, *C10G47/16*(2006.01)i

According to International Patent Classification (IPC) or to both national classification and IPC

B.  FIELDS SEARCHED

Minimum documentation searched (classification system followed by classification symbols)
C10G47/12, B01J29/16, B01J29/48, B01J29/78, B01J35/10, C10G47/16

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 49-117503 A  (Mitsubishi Petrochemical Co., Ltd.), 09 November, 1974 (09.11.74), Claims; page 7, example 6; table 7 & US 3929618 A      & GB 1423473 A & DE 2411351 A      & FR 2221510 A & NL 7403422 A      & CA 1022190 A | 1-8 |
| A | JP 56-157488 A  (Mobil Oil Corp.), 04 December, 1981 (04.12.81), Claims; page 10, examples 2 to 4; tables 1 to 3 & US 4305808 A       & EP 38140 A1 & CA 115689 A | 1-8 |

| ☒  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 August, 2007 (14.08.07) | 28 August, 2007 (28.08.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

37

**INTERNATIONAL SEARCH REPORT**

| International application No. |
| --- |
| PCT/JP2007/000529 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 62-84181 A  (Exxon Research & Engineering Co.), 17 April, 1987 (17.04.87), Claims; pages 8 to 10, examples 2, 3; tables III, IV & JP 62-84182 A        & US 4664777 A & US 4608153 A        & EP 219195 A1 & EP 211593 A2        & BR 8603603 A & CA 1275064 A        & BR 8603604 A & CA 1264694 A | 1-8 |
| A | JP 4-222634 A  (Mobil Oil Corp.), 12 August, 1992 (12.08.92), Claims; Par. Nos. [0044], [0053] to [0066] & US 5001296 A        & US 5043513 A & EP 445969 A2        & AU 644626 B | 1-8 |
| A | US 6133494 A  (Phillips Petroleum Co.), 17 October, 2000 (17.10.00), Claims; examples I, II; tables I to IV & US 5945364 A | 1-8 |
| A | JP 3-52993 A  (Idemitsu Kosan Co., Ltd.), 07 March, 1991 (07.03.91), Claims; example 1; comparative example 1; table 3 (Family: none) | 1-8 |
| A | JP 8-183962 A  (Kabushiki Kaisha Cosmo Research Institute et al.), 16 July, 1996 (16.07.96), Claims; examples 1 to 9 (Family: none) | 1-8 |

Form PCT/ISA/210 (continuation of second sheet) (April 2005)

**INTERNATIONAL SEARCH REPORT**

International application No.

PCT/JP2007/000529

1) In claim 1, the raw material hydrocarbon oil to be subjected to hydrogenolysis includes all those "which contains polycyclic aromatic hydrocarbon and in which the ratio of carbons constituting an aromatic ring to the total carbons in the hydrocarbon oil (ratio of carbons constituting an aromatic ring) is 35% by mole or more". However, what is disclosed within the meaning of PCT Article 5 is only a raw material hydrocarbon oil with a specific property described in the specification, and claim 1 lacks support within the meaning of PCT Article 6.

2) Claim 1 includes all the hydrogenolysis step "in which 40% or more of a fraction with a boiling point of 215°C or higher in the raw material hydrocarbon oil is converted into a fraction with a boiling point lower than 215°C and an oil produced by hydrogenolysis containing 30% by volume or more of monocyclic aromatic hydrocarbon is produced". However, what is disclosed within the meaning of PCT Article 5 is only a hydrogenolysis step using a specific hydrogenolysis catalyst described in the specification and selecting a specific operational condition, and claim 1 lacks support within the meaning of PCT Article 6.

3) Comparative examples 1-3 in the specification are examples in which raw material oil B "which contains polycyclic aromatic hydrocarbon and in which the ratio of carbons constituting an aromatic ring to the total carbons in the hydrocarbon oil (ratio of carbons constituting an aromatic ring) is 35% by mole or more" is used as the raw material hydrocarbon oil and 40% or more of a fraction with a boiling point of 215°C or higher in the raw material hydrocarbon oil is converted into a fraction with a boiling point lower than 215°C in the hydrogenolysis step, however, monocyclic aromatic hydrocarbon is not contained at 30% by volume or more. That is, it is demonstrated that even if 40% or more of a fraction with a boiling point of 215°C or higher in the raw material hydrocarbon oil specified in claim 1 is converted into a fraction with a boiling point lower than 215°C, an oil produced by hydrogenolysis containing 30% by volume or more of monocyclic aromatic hydrocarbon is not produced by the applicant by himself. Accordingly, claim 1 lacks support within the meaning of PCT Article 6.

4) Comparative example 10 in the specification satisfies all the requirements of claims 1-5, however, it is a comparative example, and does not achieve the object of this application. That is, it is shown that claims 1-5 do not achieve the object of this application by the applicant by himself. Accordingly, claims 1-5 lack support within the meaning of PCT Article 6.

Therefore, a search was carried out for the scope supported by the specification and disclosed, and the specific method specifically described in the specification.
That is, a search was carried out by taking the "raw material hydrocarbon oil which contains polycyclic aromatic hydrocarbon and in which the ratio of carbons constituting an aromatic ring to the total carbons in the hydrocarbon oil (ratio of carbons constituting an aromatic ring) is 35% by mole or more" as raw material oil A or C specifically described in the specification, and the "hydrogenolysis step of performing catalytic cracking in the presence of hydrogen" as the operational condition described in claim 2 using the hydrogenolysis catalyst described in claim 6.
Also for claims 2-8 referring to claim 1, a search was carried out in the same manner as claim 1.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004148314 A
- JP H08183962 A
- JP 2000226589 A
- JP 3001963 B
- JP H03170598 B
- WO 2006062712 A
- JP 3302553 B

**Non-patent literature cited in the description**

- **Thakkar et al.** *National Petrochemical & Refiners Association, Annual Meeting,* 2005
- **Demirel et al.** *Fuel,* 1998, vol. 77 (4), 301-311
- **K. Shibata ; T. Kiyoura ; J. Kitagawa ; K. Tanabe.** *Bull. Chem. Soc. Jpn.,* 1973, vol. 46, 2985